# EUROPEAN PATENT APPLICATION

(11) **EP 4 585 649 A1**
(43) Date of publication of application: **16.07.2025**
(21) Application number: 23862505.7
(22) Date of filing: 08.09.2023
(51) Int. Cl.: C08L 79/08, C08J 3/075, C08J 9/28, C08G 73/10

(54) **RECYCLABLE POLYMER AEROGEL, COLD-STORAGE PHASE-CHANGE COMPOSITE MATERIAL, PREPARATION METHODS, AND USES**

(30) Priority: 09.09.2022 CN 202211100939; 09.09.2022 CN 202211101085
(71) Applicant: CHINA PETROLEUM & CHEMICAL CORPORATION, Chaoyang District Beijing 100728 (CN); Sinopec (Beijing) Research Institute of Chemical Industry Co., Ltd., Beijing 100013 (CN)
(72) Inventor: QIAO, Jinliang, Beijing 100013 (CN); YAO, Yuan, Beijing 100013 (CN); RU, Yue, Beijing 100013 (CN); QI, Guicun, Beijing 100013 (CN); GUO, Zhaoyan, Beijing 100013 (CN); HU, Chenxi, Beijing 100013 (CN); GAO, Yi, Beijing 100013 (CN); LAI, Jinmei, Beijing 100013 (CN); LIU, Zhenjie, Beijing 100013 (CN); ZHANG, Xiaohong, Beijing 100013 (CN); SONG, Zhihai, Beijing 100013 (CN)
(74) Representative: Hoffmann Eitle
(86) International application number: PCT/CN2023/117693
(87) International publication number: WO 2024/051811

(57) **Abstract**

The present invention relates to the field of porous materials, and particularly relates to a recyclable polymer aerogel, a preparation method therefor, a recovery method therefor, and a use thereof; and a recyclable cold-storage phase-change composite material containing the recyclable polymer aerogel, a recyclable cold-storage phase-change material having a real-time temperature monitoring function, a preparation method therefor, and a use thereof. The polymer in the polymer aerogel comprises a maleic anhydride group-containing structural unit and a maleimide group-containing structural unit. According to the present invention, the polymer comprising a maleimide group-containing structural unit is prepared into an aerogel for the first time, and the application range of maleic anhydride-containing and maleimidecontaining copolymers is widened. In addition, the aerogel prepared in the present invention has extremely high recovery efficiency, after dissolution and recovery by aqueous ammonia, the recycle efficiency may be higher than 99%; and the aerogel preparation and recovery process does not need any organic solvent and has the characteristics of high efficiency with low energy consumption and environmental friendliness. The recyclable cold-storage phase-change composite material can be recycled, achieves less leakage, and can keep low temperature for a long period of time. The recyclable cold-storage phase-change material having a real-time temperature monitoring function has a layered structure comprising an inner layer formed by a recyclable cold-storage phase-change composite material, and an outer layer formed by a second polymer aerogel, and can achieve both large-batch temperature monitoring and recyclability.

## Description

### Technical field

The present invention relates to the field of porous materials, and particularly relates to a recyclable polymer aerogel and a preparation method, a recycling method and application thereof; as well as a recyclable cold-storage phase-change composite material containing the recyclable polymer aerogel, a recyclable cold-storage phase-change material with real-time temperature monitoring function and a preparation method and application thereof.

### Background art

Polymer aerogel is a novel lightweight solid material which is formed by the aggregation of colloidal particles or polymer molecules, has a three-dimensional porous structure, is filled with a gas dispersion medium in reticular pores and has the characteristics of low density, high porosity and large specific surface area. It also has the properties of high temperature resistance, low thermal conductivity and low refractive index. At present, the material has been widely applied to heat and sound insulation materials, adsorption separation, catalysis, energy storage and conversion, sound absorption and sound insulation, sensor platforms, antifouling and anti-sticking materials, water-resistant fabrics, proton exchange membranes and the like.

Polymer aerogel is generally prepared by sol-gel method, phase separation method. Sol-gel method needs to include at least three processes: solution-sol conversion, sol-gel conversion, and gel-aerogel conversion, and requires up to 6-7 days of aging treatment, which takes a long time. Phase separation method can first use an organic solvent to make a polymer solution, and then use water to replace the organic solvent after gelation to make a hydrogel, and then make an aerogel. The disadvantage of this method is that a large amount of organic solvent has to be handled. Polymer aerogel may also be prepared directly using an aqueous solution, but the aerogel product must be subjected to crosslinking and hydrophobic post-treatment, and the process is complicated. Apparently, on one hand, the preparation method of polymer aerogel, especially crosslinked low-density polymer aerogel, may cause environmental pollution, on the other hand, the product is difficult to recycle. Therefore, as the consumption amount increases, polymer aerogel may generate a more serious "white pollution" problem than general plastic products, which restricts the industrial application of polymer aerogel. Obviously, the development of low-pollution recyclable polymer aerogel is an urgent technical problem to be solved in the aerogel technology.

In order to realize hydrophobic and water-resistant effect, polymer aerogel prepared in the prior art often needs to be subjected to crosslinking and hydrophobic treatment, and the prepared crosslinked aerogel is extremely difficult to recycle. Therefore, the preparation of hydrophobic and water-resistant aerogels without crosslinking is the best way to realize the recyclability of aerogels. However, in general, a large number of organic solvents are used in the preparation and recycle of hydrophobic aerogels, which brings new pollution.

In recent years, the demand for cold energy has rapidly increased, making low temperature energy storage very attractive. There are two common refrigeration methods: one is active refrigeration, for example, with refrigeration and freezing apparatus using electrical energy, such as refrigerators or freezers; the other is passive refrigeration, for example, with cold-storage boxes, cold-storage bags, ice boxes and the like which utilize cold-storage phase-change materials for refrigeration. Active refrigeration methods with refrigerators and the like are costly, and controlling and reducing consumption and improving system efficiency have become one of the primary tasks of researchers on the subject, while passive refrigeration methods with cold-storage boxes and phase-change materials can use nighttime "trough" electrical energy or green electrical energy such as solar energy to store cold, which is a promising development direction. Among the numerous energy storage technologies, methods of storing large amounts of energy using solid-liquid transition based on phase-change materials have been performed in various cold applications such as food storage, transportation, and air conditioning. Phase-change materials have a high energy storage density and provide a compact and feasible solution to the problem of imbalance in supply and demand. Phase-change materials are mainly divided into organic and inorganic phase-change materials, and compared with inorganic phase-change materials, organic phase-change materials are more concerned in practical application due to the advantages of no toxicity, slight supercooling, good cycle stability and the like. However, organic phase-change materials are subject to the risk of leakage when used directly as energy storage materials, and it is essential that the phase-change materials are encapsulated to prevent leakage problems. In addition, it is also necessary to consider reprocessability and recyclability of organic phase-change materials, so as to avoid environmental pollution and resource waste caused by them.

Therefore, how to provide a hydrophobic aerogel which not only has hydrophobic and water-resistant effect but also can be conveniently recycled in an environmentally friendly manner, and how to provide a recyclable cold-storage phase-change composite material with low leakage and recyclability on the basis of the above aerogel is a technical problem to be solved at present.

### Contents of the invention

In view of the technical problems existing in the prior art, the present invention provides a recyclable polymer aerogel and a preparation method, a recycling method and application thereof, wherein a polymer containing a maleimide group-containing structural unit is prepared into an aerogel for the first time, so that the application range of a copolymer containing maleic anhydride group and maleimide group-containing structural units is widened. More importantly, the aerogel prepared in the present invention has a very high recycle efficiency, and after being dissolved and recycled with aqueous ammonia, it may have a recycle efficiency higher than 99%. The preparation and recycle process of the aerogel does not need to use any organic solvent, and has the characteristics of low energy, high efficiency, green and environmental friendliness. In addition, the polymer aerogel of the present invention has good hydrophobicity and water resistance, and at the same time, it has low thermal conductivity, low density and good heat resistance. It can be used in many fields and has high application value.

The inventors of the present invention found in research that when a copolymer containing maleic anhydride and groups derived therefrom, such as a polymer raw material containing one or more of maleic anhydride-, maleimide-, maleic acid and ammonium salt-, maleamic acid and ammonium salt-group-containing structural units, is dissolved in aqueous ammonia, a polymer aqueous solution can be obtained. After freeze-drying, heat treatment is carried out to obtain a copolymer aerogel containing a maleic anhydride group and a maleimide group and having hydrophobicity and water resistance. Due to the strong hydrogen bonding between the functional groups of maleic acid and its ammonium salt, maleamic acid and its ammonium salt, maleic anhydride and maleimide, the three-dimensional pore structure of the aerogel can be stabilized during the heat treatment process. A hydrophobic and water-resistant polymer aerogel can be obtained without crosslinking and hydrophobic treatment. The preparation method is green and environmentally friendly, and the preparation time and the material cost are reduced. The polymer aerogel prepared by the method of the present invention can be recycled under the action of aqueous ammonia. The special properties of such polymer can be utilized to realize the repeated conversion of water-soluble polymer and water-resistant hydrophobic aerogel. The above process does not require the use of any organic solvent, and is more environmentally friendly.

On the basis of the recyclable polymer aerogel, the present invention also provides a recyclable cold-storage phase-change composite material and a preparation method and application thereof. The recyclable cold-storage phase-change composite material not only has cold-storage capacity, but also can be recycled and reused. At the same time, it has the characteristics of low leakage. On this basis, the present invention also provides a recyclable cold-storage phase-change material with real-time temperature monitoring function, which not only has cold-storage capacity, recyclability and low leakage, but also has real-time temperature monitoring function.

A first aspect of the present invention is to provide a polymer aerogel, wherein the polymer contains a maleic anhydride group-containing structural unit and a maleimide group-containing structural unit.

According to the present invention, the maleic anhydride group refers to 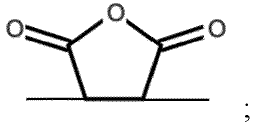 the maleimide group refers to

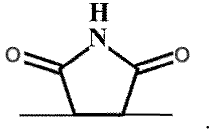

According to the present invention, the polymer is a carbon chain polymer in which the heteroatoms O and N are present in the pendant groups.

In a preferred embodiment of the present invention, the mole proportion of the maleimide group-containing structural unit in the polymer is 5%-70%, preferably 10%-60%, more preferably 20%-50%, such as 20%, 25%, 30%, 35%, 40%, 45%, 50%, as well as any two numerical values or any intervals between any two numerical values, based on 100% of the total mole amount of the maleic anhydride group-containing structural unit and the maleimide group-containing structural unit.

According to the present invention, the polymer can be selected within a wide range, and in a preferred embodiment of the present invention, the polymer is derived from a polymer raw material containing one or more of maleic anhydride-, maleimide-, maleic acid and its ammonium salt-, maleamic acid and its ammonium salt-group-containing structural units.

The maleic anhydride group refers to 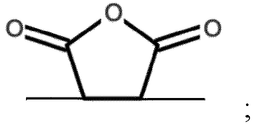 the maleimide group refers to 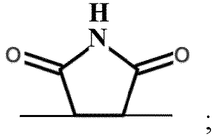 the maleic acid and its ammonium salt group, the maleamic acid and its ammonium salt group refer to 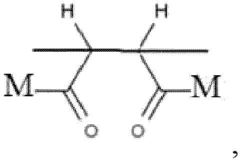 wherein M is the same or different, each of which is hydroxyl or amino or ammonium (-ONH₄).

According to the present invention, the polymer is a carbon chain polymer in which the heteroatoms O and N are present in the pendant groups.

In the present invention, the polymer raw material includes, but not limited to, a copolymer of a polymerizable monomer including one or more of maleic anhydride, maleimide, maleic acid and its ammonium salt, maleamic acid and its ammonium salt with an olefin monomer. The present invention can also be achieved, for example, when the polymer raw material is styrene-maleic anhydride-vinyl silicone oil copolymer. The above-mentioned copolymer of a polymerizable monomer including one or more of maleic anhydride, maleimide, maleic acid and its ammonium salt, maleamic acid and its ammonium salt with an olefin monomer has a lower raw material cost.

Preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer is at least one of α-methyl styrene, styrene, isobutylene, vinyl acetate. More preferably, the polymer raw material is an alternating copolymer of a polymerizable monomer including one or more of maleic anhydride, maleimide, maleic acid and its ammonium salt, maleamic acid and its ammonium salt with one of α-methyl styrene, styrene, isobutylene.

By way of example, the polymer raw material in the present invention includes, but not limited to, at least one of styrene-maleic anhydride copolymer, styrene-maleic anhydride-vinyl silicone oil copolymer, and maleic anhydride-isobutylene copolymer. Preferably, the polymer raw material in the present invention includes at least one of styrene-maleic anhydride copolymer and maleic anhydride-isobutylene copolymer.

In a preferred embodiment of the present invention, the polymer aerogel is capable of being dissolved in aqueous ammonia at 0-150°C to form a polymer aqueous solution. Preferably, the polymer aqueous solution can be recycled through pre-freezing, freeze-drying and heat treatment to obtain a polymer aerogel. Based on this, the polymer aerogel of the present invention can be conveniently recycled in an environmentally friendly manner.

In a preferred embodiment of the present invention, the polymer aerogel has a thermal conductivity coefficient of 0.025-0.05 W/(m.k), preferably 0.027-0.04 W/(m.k). The polymer aerogel of the present invention is featured with a low thermal conductivity, and can be directly used as a thermal insulation material without any treatment.

In a preferred embodiment of the present invention, the polymer aerogel has a density of 10-100 kg/m³, preferably 15-75 kg/m³, specifically, for example, 15 kg/m³, 35 kg/m³, 45 kg/m³, 55 kg/m³, 65 kg/m³, 75 kg/m³, as well as any two numerical values or any intervals between any two numerical values; and/or the polymer aerogel is a porous material. The polymer aerogel of the present invention has high porosity, is a three-dimensional porous material, and can be used as a carrier. For example, when used as a framework to load an organic phase-change material, the polymer aerogel can avoid the leakage of the phase-change material, and the prepared phase-change composite material can also be recycled with aqueous ammonia.

The inventors of the present invention found in research that, when being styrene-maleic anhydride-maleimide copolymer aerogel, the polymer aerogel also has photoluminescence performance and is capable of changing an optical signal along with the change of temperature. The photoluminescence performance of the polymer aerogel in the present invention can also be utilized to provide an indicator material for displaying temperature changes.

In a preferred embodiment of the present invention, the polymer aerogel has a static water contact angle of 100° or greater, preferably 110° or greater, more preferably 135°or greater.

In a preferred embodiment of the present invention, the polymer aerogel is insoluble in water, and preferably the polymer aerogel is soaked in water at 20-40°C for 24 h, preferably 72 h, more preferably 168 h, without dissolving to form an aqueous solution of the polymer. The polymer aerogel of the present invention has the characteristics of super lipophilicity and hydrophobicity, and can be directly used as an oil-water separation material without any treatment.

In a preferred embodiment of the present invention, the polymer aerogel is prepared by reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating.

According to the present invention, the polymer aerogel may be an anisotropic aerogel or an isotropic aerogel.

The difference between an anisotropic aerogel and an isotropic aerogel is that the pore structure is different. The pore structure of an anisotropic aerogel shows a longrange order, which is mainly due to the directional growth of ice crystals in the pre-freezing stage of the aerogel. During the growth process, impurities (the polymer in the present invention) are discharged, and accumulated to form a pore wall; and through the subsequent freeze-drying, i.e., the removal of ice, a porous aerogel is obtained. Therefore, an anisotropic aerogel can be obtained using different cold source temperatures in a single direction during pre-freezing. There are many options for implementing the cold source temperatures in a single direction, including, but not limited to, in pre-freezing, with the use of liquid nitrogen as a low-temperature cold source, placing a mold on a copper column immersed in liquid nitrogen, so that ice crystals grow upward from the bottom of the mold, and an aerogel with anisotropic pore structure is finally formed.

The anisotropic aerogel is featured with different pore structure of the aerogel, different axial and radial thermal conductivity coefficients, as well as different mass and sound transmission rates. the anisotropic aerogel/isotropic aerogel can be selected according to different application conditions. For example, the inventors of the present invention found that when the phase-change material is encapsulated in the present invention, the leakage can be significantly reduced by using the preferred anisotropic aerogel, and there is no requirement for the direction of the anisotropic aerogel.

A second aspect of the present invention is to provide a preparation method of a polymer aerogel, which comprises reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating to obtain the polymer aerogel.

The preparation method of the aerogel of the present invention only requires heat treatment of the water-soluble aerogel, which avoids the introduction of crosslinking agent or hydrophobic treatment to prepare a hydrophobic and water-resistant aerogel. The preparation method is simple and easy, green and environmentally friendly, and is suitable for the preparation of various maleimide copolymer aerogels. The preparation method of the aerogel in the present invention does not require the addition of any crosslinking agent.

In a preferred embodiment of the present invention, the preparation method comprises the steps of:
(1) reacting the polymer raw material with aqueous ammonia under a closed condition to obtain a polymer aqueous solution;
(2) subjecting the polymer aqueous solution obtained in step (1) to pre-freezing and then to freeze-drying, to obtain a water-soluble polymer (i.e., a polymer aerogel precursor);
(3) subjecting the water-soluble polymer obtained in step (2) to heat treatment, to obtain the polymer aerogel.

According to the present invention, the amounts of the polymer raw material, aqueous ammonia and the like in step (1) can be selected within a wide range, and in a preferred embodiment of the present invention, in step (1):
based on 100% of the total mass of the reaction system, the mass fraction of the polymer raw material is 0.1%-30%, preferably 0.5%-10%, more preferably 1%-5%, and the mass fraction of ammonia by mass of ammonia in aqueous ammonia is 0%-30%, preferably 0.01%-10%, more preferably 0.1%-1%, the balance being water.

According to the present invention, the reaction conditions and the like in step (1) may be selected within a wide range, and in a preferred embodiment of the present invention, the reaction conditions include that: the reaction temperature is 0-200°C, preferably 50-150°C, more preferably 80-100°C, and/or, the reaction time is 0.01-100 h, preferably 0.5-10 h, more preferably 1-5 h. The reaction pressure is not particularly limited, and the reaction is preferably carried out under normal pressure.

In a preferred embodiment of the present invention, in step (2), the polymer aqueous solution obtained in step (1) is subjected to pre-freezing in a mold to obtain an ice block. The mold can be in any shape and any size, and can be customized according to the required aerogel. The freezing can be performed by using a cold source such as a refrigerator or by using liquid nitrogen.

The cold source temperatures in various directions of the aqueous solution during pre-freezing are the same or different. The prepared aerogel is isotropic if the cold source temperatures in various directions of the mixed solution during pre-freezing corresponding to the step are consistent, and an anisotropic aerogel can be prepared if the cold source temperatures in various directions of the mixed solution during pre-freezing are different. Preferably, the cold source temperatures in a single direction during pre-freezing are different, such that an anisotropic aerogel is obtained. There are many options for implementing the cold source temperatures in a single direction, including, but not limited to, in pre-freezing, with the use of liquid nitrogen as a low-temperature cold source, placing a mold on a copper column immersed in liquid nitrogen, so that ice crystals grow upward from the bottom of the mold.

Specifically, the pre-freezing conditions may be conventional temperature conditions in the art, and are not particularly limited in the present invention.

According to the present invention, the freeze-drying conditions may be selected within a wide range, and are not particularly limited in the present invention, and in a preferred embodiment of the present invention, the freeze-drying conditions include that: the temperature is -10°C or lower, for example, -20°C or lower, or -30°C or lower. According to the present invention, the freeze-drying vacuum degree may be selected within a wide range, and in a preferred embodiment of the present invention, the vacuum degree is 1000 Pa or lower, for example, 100 Pa or lower, or 10 Pa or lower. The above freeze-drying conditions can be flexibly selected based on cost, efficiency, and conventional operation mode of the device.

The freeze-drying process may be performed using various freeze-drying devices in the prior art, such as a freeze dryer, a freeze spray dryer, an industrial freeze dryer and the like.

According to the present invention, the heat treatment conditions in step (3) can be selected within a wide range, and in a preferred embodiment of the present invention, the heat treatment conditions in step (3) include that: the temperature is 100-300°C, preferably 130-200°C, more preferably 150-190°C, and/or, the time is 0.1-10 h, preferably 0.5-3 h, more preferably 1-2 h.

In a preferred embodiment of the present invention, the polymer raw material is capable of being reacted with aqueous ammonia to obtain a water-soluble polymer.

According to the present invention, the polymer raw material can be selected within a wide range, and in a preferred embodiment of the present invention, the polymer raw material is a polymer containing one or more of maleic anhydride-, maleimide-, maleic acid and its ammonium salt-, maleamic acid and its ammonium salt-group-containing structural units; preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer comprises at least one of α-methyl styrene, styrene, isobutylene.

By way of example, the polymer raw material in the present invention includes, but not limited to, at least one of styrene-maleic anhydride copolymer, styrene-maleic anhydride-vinyl silicone oil copolymer, and maleic anhydride-isobutylene copolymer. Preferably, the polymer raw material in the present invention includes at least one of styrene-maleic anhydride copolymer and maleic anhydride-isobutylene copolymer.

More specifically, the preparation method of the polymer aerogel in the present invention comprises the following steps: a. reacting a polymer raw material containing one or more of maleic anhydride-, maleimide-, maleic acid and its ammonium salt-, maleamic acid and its ammonium salt-group-containing structural units with aqueous ammonia in a closed container, and heating to prepare a polymer aqueous solution; b. pouring the polymer aqueous solution into a mold, then pre-freezing, after complete freezing into an ice block, placing the obtained the ice block in a freeze dryer for freeze-drying for a certain time, to obtain a water-soluble polymer; c. subjecting the water-soluble polymer to heat treatment under constant temperature conditions for dehydrating and deaminating to obtain a water-resistant maleimide-based aerogel.

The above-mentioned polymer raw materials are all polymers which have been disclosed in the prior art, which can be obtained commercially from the prior art or prepared according to the methods disclosed in the prior art.

In the present invention, the material of the closed container is not particularly limited, and the container can be formed by metal, nonmetal, polymer or other materials.

The term "and/or" as used herein means that the two conditions before and after "and/or" can be selected alternatively or in combination.

A third aspect of the present invention is to provide a recycling method of a polymer aerogel, wherein the polymer aerogel is the polymer aerogel described in the first aspect or the polymer aerogel prepared by the preparation method described in the second aspect, the recycling method comprising the steps of mixing-reacting the polymer aerogel and/or a material containing the polymer aerogel with aqueous ammonia under a closed condition until an aqueous solution containing the recycled polymer is obtained, and optionally removing insoluble substances to obtain an aqueous solution of the recycled polymer. The aerogel recycling method does not require the introduction of organic solvents, does not require high-temperature and high-pressure stirring treatment, and only requires a certain concentration of aqueous ammonia that is preferably kept below 100°C, which can achieve rapid and efficient recycle. The method is featured with low energy consumption, low pollution, and high efficiency. The recycled polymer solution can be reused for the preparation of a polymer aerogel.

The recycling method of the polymer aerogel in the present invention comprises the steps of: adding the polymer aerogel to aqueous ammonia at a certain concentration, placing it in a closed container, heating it at a certain temperature, and allowing it to dissolve completely to obtain an aqueous solution of the copolymer.

According to the present invention, the mixing-reaction conditions in the recycling method can be selected within a wide range, and in a preferred embodiment of the present invention, the mixing-reaction temperature is 0-200°C, preferably 50-150°C, more preferably 80-100°C and/or, the mixing-reaction time is 0.01-100 h, preferably 0.5-10 h, more preferably 1-5 h. The reaction pressure is not particularly limited, and the reaction is preferably carried out under normal pressure.

In a preferred embodiment of the present invention, the recycling method also comprises recycling the aqueous solution of the recycled polymer by pre-freezing, freeze-drying, heat treatment, to obtain a polymer aerogel.

According to the present invention, the cold source temperatures in various directions of the aqueous solution during pre-freezing are the same or different. The prepared aerogel is isotropic if the cold source temperatures in various directions of the aqueous solution during pre-freezing are consistent, and an anisotropic aerogel can be prepared if the cold source temperatures in various directions of the aqueous solution during pre-freezing are different. Preferably, the cold source temperatures in a single direction during pre-freezing are different, such that an anisotropic aerogel is obtained. There are many options for implementing the cold source temperatures in a single direction, including, but not limited to, in pre-freezing, with the use of liquid nitrogen as a low-temperature cold source, placing a mold on a copper column immersed in liquid nitrogen, so that ice crystals grow upward from the bottom of the mold.

According to the present invention, the freeze-drying conditions may be selected within a wide range, and are not particularly limited in the present invention, and in a preferred embodiment of the present invention, the freeze-drying conditions include that: the temperature is -10°C or lower, for example, -20°C or lower, or -30°C or lower, and/or the vacuum degree is 1000 Pa or lower, for example, 100 Pa or lower, or 10 Pa or lower.

According to the present invention, the heat treatment conditions can be selected within a wide range, and in a preferred embodiment of the present invention, the heat treatment conditions include that: the temperature is 100-300°C, preferably 130-200°C, more preferably 150-190°C, and/or, the time is 0.1-10 h, preferably 0.5-3 h, more preferably 1-2 h.

A fourth aspect of the present invention is to provide a recycled polymer aerogel obtained by the recycling method described in the third aspect.

The polymer aerogel obtained by the above method has performance equivalent to that of the polymer aerogel prepared for the first time, and can be recycled and reused again.

A fifth aspect of the present invention is to provide an application of the polymer aerogel described in the first aspect, the polymer aerogel prepared by the preparation method described in the second aspect or the recycled polymer aerogel described in the fourth aspect as a porous material, preferably as a carrier, a filter material, for adsorbing an organic phase-change material, or as an oil-water separation material, a thermal insulation material. When used as a porous material, the polymer aerogel can be used as a carrier, such as loading a phase-change material to avoid its leakage.

The hydrophobic polymer aerogel according to the present invention can be directly used for oil-water separation, as a heat-preservation and heat-insulation aerogel without surface treatment, and can also be mixed with other components to prepare a multi-component aerogel. In the case where other components are not dissolved in aqueous ammonia, the multi-component aerogel can also be recycled with aqueous ammonia.

A sixth aspect of the present invention provides a recyclable cold-storage phase-change composite material, which comprises a polymer aerogel and a phase-change material loaded in the polymer aerogel, wherein the polymer aerogel is the polymer aerogel described in the first aspect, the polymer aerogel prepared by the preparation method described in the second aspect or the recycled polymer aerogel described in the fourth aspect.

According to the present invention, the amounts of the phase-change material and the polymer aerogel in the recyclable cold-storage phase-change composite material can be selected within a wide range, in a preferred embodiment of the present invention, based on 100% of the total mass of the recyclable cold-storage phase-change composite material, the amount of the polymer aerogel is 2%-20%, preferably 4%-10%, such as 4%, 5%, 6%, 7%, 8%, 9%, 10%, as well as any two numerical values or any intervals between any two numerical values, and the amount of the phase-change material is 80%-98%, preferably 90%-96%.

Preferably, the total mass of the polymer aerogel and the phase-change material is 100%.

According to the present invention, the phase-change material can be selected within a wide range as long as it has cold-storage performance. The phase-change material includes, but not limited to, an organic phase-change material, preferably the organic phase-change material has a phase-change temperature of (-10)-30°C, and/or the latent heat of phase-change is 55-280 J/g; more preferably, the organic phase-change material is an alkane organic phase-change material, and even more preferably at least one of decane, dodecane and tetradecane.

In a preferred embodiment of the present invention, the leakage of the phase-change material in the recyclable cold-storage phase-change composite material is less than 10 wt%, preferably less than 5 wt%, more preferably less than 2 wt% under the temperature conditions where the phase-change material is in a liquid state.

According to the present invention, the polymer aerogel in the recyclable cold-storage phase-change composite material may be an anisotropic aerogel or an isotropic aerogel.

The difference between an anisotropic aerogel and an isotropic aerogel is that the pore structure is different. The pore structure of an anisotropic aerogel shows a longrange order, which is mainly due to the directional growth of ice crystals in the pre-freezing stage of the aerogel. During the growth process, impurities (the polymer in the present invention) are discharged, and accumulated to form a pore wall; and through the subsequent freeze-drying, i.e., the removal of ice, a porous aerogel is obtained. Therefore, an anisotropic aerogel can be obtained using different cold source temperatures in a single direction during pre-freezing. There are many options for implementing the cold source temperature in a single direction, including, but not limited to, in pre-freezing, with the use of liquid nitrogen as a low-temperature cold source, placing a pre-freezing container on a copper column immersed in liquid nitrogen, so that ice crystals grow upward from the bottom of the pre-freezing container, and an aerogel with anisotropic pore structure is finally formed.

The anisotropic aerogel is featured with different pore structure of the aerogel, different axial and radial thermal conductivity coefficients, as well as different mass and sound transmission rates. The anisotropic aerogel/isotropic aerogel can be selected according to different application conditions. For example, the inventors of the present invention found that when the phase-change material is encapsulated in the present invention, the leakage can be significantly reduced by using the preferred anisotropic aerogel, and there is no requirement for the direction of the anisotropic aerogel.

In a preferred embodiment of the present invention, the polymer aerogel in the recyclable cold-storage phase-change composite material is an anisotropic aerogel, preferably an anisotropic aerogel obtained using different cold source temperatures in a single direction during pre-freezing. In this preferred embodiment, the leakage of the phase-change material in the recyclable cold-storage phase-change composite material is lower under the temperature conditions where the phase-change material is in a liquid state.

In a preferred embodiment of the present invention, the polymer aerogel is capable of being dissolved in aqueous ammonia at 0-150°C to form a solution containing polymer. Preferably, the solution containing polymer can be recycled through pre-freezing, freeze-drying and heat treatment to obtain a polymer aerogel.

In a preferred embodiment of the present invention, the polymer aerogel has a thermal conductivity coefficient of 0.05 W/(m.k) or less, preferably 0.04 W/(m.k) or less. The polymer aerogel of the present invention has a low thermal conductivity, and can be directly used as a thermal insulation material without any treatment.

In a preferred embodiment of the present invention, the polymer aerogel has a density of 100 kg/m³ or less, preferably 10-100 kg/m³, preferably 15-80 kg/m³, specifically, for example, 15 kg/m³, 35 kg/m³, 45 kg/m³, 55 kg/m³, 65 kg/m³, 75 kg/m³, 80 kg/m³, as well as any two numerical values or any intervals between any two numerical values; and/or the polymer aerogel is a porous material. The polymer aerogel of the present invention has high porosity, is a porous material, and can be used as a carrier. For example, when used as a framework to load an organic phase-change material, the polymer aerogel can avoid the leakage of the phase-change material, and the prepared phase-change composite material can also be recycled with aqueous ammonia.

In a preferred embodiment of the present invention, the mole proportion of the maleimide group-containing structural unit in the polymer is 5%-70%, preferably 10%-60%, more preferably 20%-50%, such as 20%, 25%, 30%, 35%, 40%, 45%, 50%, as well as any two numerical values or any intervals between any two numerical values, based on 100% of the total mole amount of the maleic anhydride group-containing structural unit and the maleimide group-containing structural unit.

According to the present invention, the polymer can be selected within a wide range, and in a preferred embodiment of the present invention, the polymer is derived from a polymer raw material containing one or more of maleic anhydride-, maleimide-, maleic acid and its ammonium salt-, maleamic acid and its ammonium salt-group-containing structural units. The maleic anhydride group refers to 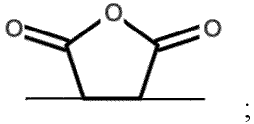 the maleimide group refers to 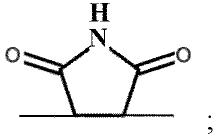 the maleic acid and its ammonium salt group, the maleamic acid and its ammonium salt group refer to 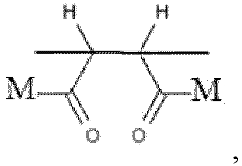 wherein M is the same or different, each of which is hydroxyl or amino or ammonium (-ONH₄).

According to the present invention, the polymer is a carbon chain polymer in which the heteroatoms O and N are present in the pendant groups.

Preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer is at least one of α-methyl styrene, styrene, isobutylene.

In a preferred embodiment of the present invention, the polymer aerogel is capable of being dissolved in aqueous ammonia at 0-150°C to form a solution containing polymer. Preferably, the solution containing polymer can be recycled through pre-freezing, freeze-drying and heat treatment to obtain a polymer aerogel. Based on this, the polymer aerogel of the present invention can be conveniently recycled in an environmentally friendly manner.

In a preferred embodiment of the present invention, the polymer aerogel has photoluminescence performance and is capable of changing an optical signal along with the change of temperature. The photoluminescence performance of the polymer aerogel in the present invention can also be utilized to provide an indicator material for displaying temperature changes.

In a preferred embodiment of the present invention, the static water contact angle of the polymer aerogel is 100° or greater, preferably 110° or greater, more preferably 135°or greater. In a preferred embodiment of the present invention, the polymer aerogel is insoluble in water, and preferably the polymer aerogel is soaked in water at 20-40°C for 24 h, preferably 72 h, more preferably 168 h, without dissolving to form an aqueous solution of the polymer. The polymer aerogel of the present invention has the characteristics of super lipophilicity and hydrophobicity, and can be directly used as an oil-water separation material without any treatment.

In a preferred embodiment of the present invention, the preparation method of the polymer aerogel comprises reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating to obtain the polymer aerogel.

The preparation method of the aerogel of the present invention only requires heat treatment of the water-soluble aerogel, which avoids the introduction of crosslinking agent or hydrophobic treatment to prepare a hydrophobic and water-resistant aerogel. The preparation method is simple and easy, green and environmentally friendly, and is suitable for the preparation of various maleimide copolymer aerogels. The preparation method of the aerogel in the present invention does not require the addition of any crosslinking agent.

A seventh aspect of the present invention is to provide a preparation method of the recyclable cold-storage phase-change composite material described in the sixth aspect, which comprises loading the phase-change material in the polymer aerogel; preferably, preparing the polymer aerogel first and then loading the phase-change material in the polymer aerogel.

The method for loading the phase-change material in the polymer aerogel can be various loading methods in the prior art. Specifically, the phase-change material can be loaded by filling and injecting the phase-change material in a liquid state so that the phase-change material is adsorbed and/or permeated in the composite aerogel.

The preparation method of the polymer aerogel comprises reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating to obtain the polymer aerogel.

The preparation method of the aerogel of the present invention only requires heat treatment of the water-soluble aerogel, which avoids the introduction of crosslinking agent or hydrophobic treatment to prepare a hydrophobic and water-resistant aerogel. The preparation method is simple and easy, green and environmentally friendly, and is suitable for the preparation of various maleimide copolymer aerogels.

In a preferred embodiment of the present invention, the preparation method comprises the steps of: (1) reacting a polymer raw material containing one or more of maleic anhydride-, maleimide-, maleic acid and its ammonium salt-, maleamic acid and its ammonium salt-group-containing structural units with aqueous ammonia under a closed condition to obtain a polymer aqueous solution; (2) subjecting the polymer aqueous solution obtained in step (1) to pre-freezing and then to freeze-drying to obtain a water-soluble polymer (i.e., a polymer aerogel precursor); (3) subjecting the water-soluble polymer obtained in step (2) to heat treatment, to obtain the polymer aerogel; (4) loading the phase-change material in the polymer aerogel.

According to the present invention, the amounts of the polymer raw material, aqueous ammonia and the like in step (1) can be selected within a wide range, and in a preferred embodiment of the present invention, in step (1):
based on 100% of the total mass of the reaction system, the mass fraction of the polymer raw material is 0.1%-30%, preferably 1%-10%, more preferably 2%-5%, and the mass fraction of ammonia in the raw material, by mass of ammonia in aqueous ammonia, is 0.001%-30%, preferably 0.01%-10%, more preferably 0.1%-1%, the balance being water.

According to the present invention, the reaction conditions and the like in step (1) may be selected within a wide range, and in a preferred embodiment of the present invention, the reaction conditions include that: the reaction temperature is 0-200°C, preferably 50-150°C, more preferably 80-100°C, and/or, the reaction time is 0.01-100 h, preferably 0.5-10 h, more preferably 1-5 h.

In a preferred embodiment of the present invention, in step (2), the polymer aqueous solution obtained in step (1) is subject to pre-freezing in a pre-freezing container to obtain an ice block. The pre-freezing container can be in any shape and any size, and can be customized according to the required aerogel. The freezing can be performed by using a cold source such as a refrigerator or by using liquid nitrogen. The prepared aerogel is isotropic if the cold source temperatures in various directions of the pre-freezing container in this step are consistent, and an anisotropic aerogel can be prepared if the cold source temperatures in various directions of the pre-freezing container are different. Preferably, the cold source temperatures in a single direction during pre-freezing are different such that an anisotropic aerogel is obtained. There are many options for implementing the cold source temperatures in a single direction, including, but not limited to, in pre-freezing, with the use of liquid nitrogen as a low-temperature cold source, placing a pre-freezing container on a copper column immersed in liquid nitrogen, so that ice crystals grow upward from the bottom of the container.

Specifically, the pre-freezing conditions may be temperature conditions conventional in the art, and are not particularly limited in the present invention as long as the polymer aqueous solution is frozen into ice.

According to the present invention, the freeze-drying conditions may be selected within a wide range, and are not particularly limited in the present invention, and in a preferred embodiment of the present invention, the freeze-drying conditions include that: the temperature is -10°C or lower, for example, -20°C or lower, or -30°C or lower. According to the present invention, the freeze-drying vacuum degree may be selected within a wide range, and in a preferred embodiment of the present invention, the vacuum degree is 1000 Pa or lower, for example, 100 Pa or lower, or 10 Pa or lower. The above freeze-drying conditions can be flexibly selected based on cost, efficiency, and conventional operation mode of the device.

The freeze-drying process may be performed using various freeze-drying devices in the prior art, such as a freeze dryer, a freeze spray dryer, an industrial freeze dryer and the like.

According to the present invention, the heat treatment conditions in step (3) can be selected within a wide range, and in a preferred embodiment of the present invention, the heat treatment conditions in step (3) include that: the temperature is 100-300°C, preferably 130-200°C, more preferably 150-190°C, and/or, the time is 0.1-10 h, preferably 0.5-3 h, more preferably 1-2 h. The reaction pressure is not particularly limited, and the reaction is preferably carried out under normal pressure.

According to the present invention, the polymer raw material can be selected within a wide range, and in a preferred embodiment of the present invention, the polymer raw material is a polymer containing one or more of maleic anhydride-, maleimide-, maleic acid and its ammonium salt-, maleamic acid and its ammonium salt-group-containing structural units; preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer comprises at least one of α-methyl styrene, styrene, isobutylene, vinyl acetate.

By way of example, the polymer raw material includes, but not limited to, at least one of styrene-maleic anhydride copolymer, methyl styrene-maleic anhydride copolymer, maleic anhydride-isobutylene copolymer.

The above-mentioned polymer raw materials are all polymers which have been disclosed in the prior art, which can be obtained commercially from the prior art or prepared according to the methods disclosed in the prior art.

In the present invention, the material of the closed container is not particularly limited, and the container can be formed by metal, nonmetal, polymer or other materials.

More specifically, the preparation method of the polymer aerogel in the present invention comprises the following steps: a. reacting a polymer raw material containing one or more of maleic anhydride-, maleimide-, maleic acid and its ammonium salt-, maleamic acid and its ammonium salt-group-containing structural units with aqueous ammonia in a closed container, and heating to prepare a polymer aqueous solution; b. pouring the polymer aqueous solution into a pre-freezing container, then pre-freezing, after complete freezing into an ice block, placing the obtained the ice block in a freeze dryer for freeze-drying for a certain time, to obtain a water-soluble polymer; c. subjecting the water-soluble polymer to heat treatment under constant temperature conditions for dehydrating and deaminating to obtain a water-resistant maleimide-based aerogel.

The cold source temperatures in various directions of the solution during pre-freezing are the same or different. More preferably, the cold source temperatures in various directions of the solution during pre-freezing are different, such that an anisotropic aerogel is obtained; most preferably, the cold source temperatures in a single direction of the solution during pre-freezing are different, such that an anisotropic aerogel is obtained.

In a preferred embodiment of the present invention, at the pre-freezing stage, the polymer aqueous solution obtained in step (1) is subjected to different cold source temperatures in various directions, preferably different cold source temperatures in a single direction.

In a more preferred embodiment of the present invention, before pre-freezing in step (2), the mold is inserted into the polymer aqueous solution obtained in step (1), where the mold can be inserted to contact with the bottom of the pre-freezing container, or can be spaced from the bottom of the pre-freezing container, preferably the latter; and after the heat treatment in step (3), the mold is optionally taken out to obtain a polymer aerogel having a cavity, and in step (4), a phase-change material is loaded in the polymer aerogel. In this way, an object to be stored can be placed in the cavity left after the mold is taken out to facilitate storage.

In the case of the mold in the present invention being provided with a cavity structure, the mold may not be taken out and the object to be stored can be placed in the cavity of the mold when in use. At the same time, placing the refrigerated object (such as vaccine, drug and the like) in the cavity makes the cold-storage environment of the refrigerated object more uniform and the preservation effect better.

The selection of the mold is not particularly limited, and the material of the mold can be glass, plastic, metal and the like; the mold can be solid or provided with a cavity structure, the shape of which is not limited, preferably cylindrical, columnar and the like. In terms of structure, the mold can be solid or provided with a cavity structure in the case where it is taken out; the mold is preferably provided with a cavity structure with an openable upper part in the case where it is not taken out. The size of the mold can be adjusted according to the size of the object to be stored, and it is not particularly limited in the present invention.

The term "and/or" as used herein means that the two conditions before and after "and/or" can be selected alternatively or in combination.

Real-time monitoring of the temperature of the phase-change material is also important, for example most vaccines including COVID-19 vaccine must be kept below 8°C during transport and storage, and therefore real-time temperature monitoring of each vaccine is required. It is also necessary to consider reprocessability and recyclability of the organic phase-change material, so as to avoid environmental pollution and resource waste caused by it.

In view of the above technical problems, an eighth aspect of the present invention is to provide a recyclable cold-storage phase-change material with real-time temperature monitoring function, wherein the recyclable cold-storage phase-change material has a layered structure, comprising an inner layer formed by the recyclable cold-storage phase-change composite material described in the sixth aspect or the recyclable cold-storage phase-change composite material prepared by the preparation method described in the seventh aspect, and an outer layer formed by a second polymer aerogel.

According to the present invention, the thickness of the inner layer and the thickness of the outer layer can be selected within a wide range, and in a preferred embodiment of the present invention, the thickness of the inner layer is 3 mm or more, and the thickness of the outer layer is 5 mm or more.

In a preferred embodiment of the present invention, a spacer layer is further disposed between the inner layer and the outer layer. The selection of the material of the spacer layer is not particularly limited in the present invention as long as it can isolate the phase-change material with the aerogel encapsulated inside from the outside aerogel for insulation to avoid mutual permeation. The material includes, but not limited to, metal (e.g., thin aluminum foil), plastic and the like.

The thickness of the above inner layer can be controlled during the preparation process according to the distance of the four walls or the four walls and the bottom of the mold from the spacer layer. The thickness of the outer layer can be controlled according to the distance of the periphery of the spacer layer from the wall of the outer container.

The recyclable cold-storage phase-change material can be cylindrical with a radial layered structure, wherein the outer layer is formed by the second polymer aerogel, the inner layer is formed by the recyclable cold-storage phase-change composite material, and the spacer layer is disposed between the two layers; or the recyclable cold-storage phase-change material can be flat with a layered structure, wherein the middle layer is the spacer layer, on one side of the spacer layer is the outer layer formed by the second polymer aerogel, and on the other side is the inner layer formed by the recyclable cold-storage phase-change composite material; preferably, the recyclable cold-storage phase-change material is also wrapped on the most outside with an encapsulation material. The shape and structure of the spacer layer are not particularly limited in the present invention, for example, it can be cylindrical or flat as long as it can be wrapped on the outside of the aerogel of the inner layer to isolate the inner and outer layers.

Preferably, the inner layer is provided with a cavity; the cavity is from the mold itself or from a cavity formed after the mold is taken out. In application, a refrigerated object (such as vaccine, drug and the like) can also be placed in the cavity, which makes the cold-storage environment in which the refrigerated object is located more uniform and the preservation effect better.

According to the present invention, the second polymer aerogel can be selected within a wide range, preferably, the second polymer aerogel has photoluminescence (i.e., fluorescence) performance and is capable of changing an optical signal along with the change of temperature. Optical signal herein refers to the peak position and/or intensity in the fluorescence spectrum.

In a preferred embodiment of the present invention, the second polymer aerogel is selected from at least one of the polymer aerogels having photoluminescence (i.e., fluorescence) performance and capable of changing an optical signal along with the change of temperature among the recyclable cold-storage phase-change composite material described in the sixth aspect; and the second polymer aerogel and the polymer aerogel in the recyclable cold-storage phase-change composite material can be the same or different. More preferably, the second polymer is a styrene-maleic anhydride-maleimide copolymer (i.e. a copolymer formed by a polymerizable monomer including one or more of maleic anhydride, maleimide, maleic acid and its ammonium salt, maleamic acid and its ammonium salt with styrene). The inventors of the present invention found that the styrene-maleic anhydride-maleimide copolymer aerogel has a fluorescence performance with the optical signal being capable of changing along with the change of temperature.

For example, in a specific embodiment of the present invention, the cold-storage phase-change material according to the present invention is characterized in that the inner layer is formed by the aerogel phase-change composite material described in the sixth aspect, and the outer layer is formed by the polymer aerogel used in the aerogel phase-change composite material described in the sixth aspect, preferably, the aerogel has a photoluminescence effect (for example, it may be a styrene maleic anhydride/maleimide copolymer aerogel), with the intensity changing with the change of temperature (for example, the intensity increasing with the decrease of temperature), so that the temperature of the phase-change material can be determined by measuring the fluorescence intensity, to realize real-time temperature monitoring on the cold-storage material.

A ninth aspect of the present invention is to provide a preparation method of the recyclable cold-storage phase-change material with real-time temperature monitoring function described in the eighth aspect, which comprises the following steps:
(1) reacting a polymer raw material containing one or more of maleic anhydride-, maleimide-, maleic acid and its ammonium salt-, maleamic acid and its ammonium salt-group-containing structural units with aqueous ammonia under a closed condition to obtain a polymer aqueous solution;
(2) placing the polymer aqueous solution in a space on the inner side of the spacer layer or a space between the inner side of the spacer layer and the mold, then pre-freezing, and freeze-drying to obtain a water-soluble polymer (i.e., a polymer aerogel precursor);
(3) subjecting the water-soluble polymer obtained in step (2) to heat treatment, and optionally taking out the mold, to obtain a polymer aerogel with a cavity;
(4) loading a phase-change material in the polymer aerogel obtained in step (3), to form an inner layer of the recyclable cold-storage phase-change material;

wherein, the second polymer aerogel is wrapped on the outside of the spacer layer in step (2), step (3), step (4) and/or between the steps and/or after step (4), so as to form an outer layer of the recyclable cold-storage phase-change material;
alternatively,
placing an aqueous solution containing the second polymer aerogel and/or a second polymer aqueous solution in a space on the outer side of the spacer layer in step (2), so as to form an outer layer of the recyclable cold-storage phase-change material; preferably, the second polymer aqueous solution is the same as the polymer aqueous solution in step (1);
that is, step (2) is preferably performed in the following manner:
   placing the polymer aqueous solution in a space on the outer side of the spacer layer, a space on the inner side of the spacer layer or a space between the inner side of the spacer layer and the mold respectively, to obtain a water-soluble polymer with a layered structure.

According to the above technical solution, the preparation method of the recyclable cold-storage phase-change material with real-time temperature monitoring function in the present invention comprises a preparation process of polymer aerogel, wherein the polymer aerogel disposed inside the spacer layer can be obtained using the preparation method of the polymer aerogel (recyclable polymer aerogel) described above, and at the same time, in the preparation process of the polymer aerogel of the inner layer, the second polymer aerogel or the aqueous solution containing the second polymer aerogel and/or the second polymer aqueous solution is wrapped on the outside of the spacer layer. The time when the second polymer aerogel or the aqueous solution containing the second polymer aerogel and/or the second polymer aqueous solution is wrapped on the outside of the spacer layer can be selected according to the type of the second polymer aerogel used. For example, when the second polymer aerogel is the polymer aerogel described above (i.e., the same type as the polymer aerogel of the inner layer), the water-soluble polymer obtained in step (1) can be disposed outside the spacer layer in step (2), followed by carrying out the subsequent treatment steps, so that the recyclable polymer aerogels are disposed inside and outside the spacer layer after the treatment of step (3); if the second polymer aerogel (or precursor) does not require freeze-drying but requires heat treatment, it can also be disposed outside the spacer layer in step (2); when the second polymer aerogel (or precursor) does not require heat treatment, a finished product of the second polymer aerogel can be disposed outside the spacer layer after step (3) or step (4). In a word, based on the principle of procedure or process saving, the time can be flexibly adjusted according to the type of the second polymer aerogel.

Specifically, the amount of the aerogel raw material in the inner layer and the outer layer can be selected within a wide range, and is preferably such that the thickness of the inner layer is 3 mm or more and the thickness of the outer layer is 5 mm or more in the finished product.

For the material selection of the second polymer aerogel or (precursor), the material selection and amount of the phase-change material and the like, the material selection of the second polymer aerogel or (precursor), the material selection and amount of the phase-change material described in the eighth aspect can be adopted, and will not be repeated here.

In a preferred embodiment of the present invention, the mass fraction of the polymer in the polymer aqueous solution of the inner layer is 0.1%-30%, preferably 1%-10%, more preferably 2%-5%, and/or, the mass fraction of the second polymer in the aqueous solution of the second polymer aerogel and/or in the second polymer aqueous solution each is 0.1%-30%, preferably 0.5%-10%, more preferably 1%-5%.

In a preferred embodiment of the present invention, in step (2), at the pre-freezing stage, the polymer aqueous solution obtained in step (1) is subjected to different cold source temperatures in various directions, preferably different cold source temperatures in a single direction. In this way, an anisotropic aerogel can be obtained. In this preferred embodiment, the leakage of the obtained cold-storage material is lower.

The pre-freezing container can be in any shape and any size, and can be customized according to the required aerogel or the object to be refrigerated. The freezing can be performed by using a cold source such as a refrigerator or by using liquid nitrogen. The prepared aerogel is isotropic if the cold source temperatures in various directions of the pre-freezing container in this step are consistent, and an anisotropic aerogel can be prepared if the cold source temperatures in various directions of the pre-freezing container are different. In the present invention, an anisotropic aerogel is preferred, and an anisotropic aerogel obtained using different cold source temperatures in a single direction is more preferred.

The specific conditions in the above steps (1), (2) and (3) all can be selected within a wide range, and the preferred conditions in the above preparation method of the polymer aerogel can be preferably adopted.

More specifically, the heat treatment temperature in step (3) is 100-300°C, preferably 120-220°C, more preferably 160-200°C; the heat treatment time is 0.1-10 h, preferably 0.5-3 h, more preferably 1-2 h.

According to the present invention, the recycling method of the recyclable polymer aerogel in the above recyclable cold-storage phase-change composite material can be provided as follows:
the recycling method comprising the steps of mixing-reacting the polymer aerogel and/or a material containing the polymer aerogel with aqueous ammonia under a closed condition until an aqueous solution containing the recycled polymer is obtained, and optionally removing insoluble substances to obtain an aqueous solution of the recycled polymer. The aerogel recycling method does not require the introduction of organic solvents, does not require high-temperature and high-pressure stirring treatment, and only requires a certain concentration of aqueous ammonia that is preferably kept below 100°C, which can achieve rapid and efficient recycle. The method is featured with low energy consumption, low pollution, and high efficiency. The recycled polymer solution can be reused for the preparation of a polymer aerogel.

The recycling method of the polymer aerogel in the present invention comprises the steps of: adding the polymer aerogel to aqueous ammonia at a certain concentration, placing it in a closed container, heating it at a certain temperature, and allowing it to dissolve completely to obtain an aqueous solution of the copolymer.

According to the present invention, the mixing-reaction conditions in the recycling method can be selected within a wide range, and in a preferred embodiment of the present invention, the mixing-reaction temperature is 0-200°C, preferably 50-150°C, more preferably 80-100°C and/or, the mixing-reaction time is 0.01-100 h, preferably 0.5-10 h, more preferably 1-5 h.

In a preferred embodiment of the present invention, the recycling method also comprises recycling the aqueous solution of the recycled polymer by freeze-drying, heat treatment, to obtain a polymer aerogel. Preferably, the freeze-drying conditions include that: the temperature is -10°C or lower, for example, -20°C or lower, or -30°C or lower, and/or the vacuum degree is 1000 Pa or lower, for example, 100 Pa or lower, or 10 Pa or lower.

According to the present invention, the heat treatment conditions can be selected within a wide range, and in a preferred embodiment of the present invention, the heat treatment conditions include that: the temperature is 100-300°C, preferably 130-200°C, more preferably 150-190°C, and/or, the time is 0.1-10 h, preferably 0.5-3 h, more preferably 1-2 h.

In the case of recycling the recyclable polymer aerogel in the recyclable cold-storage phase-change composite material and the recyclable cold-storage phase-change material with the real-time temperature monitoring function, the above method can be adopted, which comprises treating the recyclable cold-storage phase-change composite material or the recyclable cold-storage phase-change composite material in the inner layer of the recyclable cold-storage phase-change material with the real-time temperature monitoring function with aqueous ammonia, to separate the polymer from the phase-change material, followed by a post-treatment step, to obtain the recyclable polymer aerogel, or the preparation method of the recyclable cold-storage phase-change composite material or the recyclable cold-storage phase-change material with the real-time temperature monitoring function is reused, to obtain the recyclable cold-storage phase-change composite material or the recyclable cold-storage phase-change material with the real-time temperature monitoring function according to the present invention.

When the second polymer aerogel is the recyclable polymer aerogel of the present invention (the polymer in the polymer aerogel contains a maleic anhydride group and a maleimide group), it can be recycled together with the material of the inner layer by following the above method, and when the second polymer aerogel is a different type of polymer aerogel, the second polymer aerogel of the outer layer of the recyclable cold-storage phase-change material with real-time temperature monitoring function can be stripped, and then the subsequent recycling step is performed.

A tenth aspect of the present invention is to provide an application of the recyclable cold-storage phase-change composite material described in the sixth aspect or the recyclable cold-storage phase-change composite material prepared by the preparation method described in the seventh aspect, the recyclable cold-storage phase-change material with real-time temperature monitoring function described in the eighth aspect or the recyclable cold-storage phase-change material with real-time temperature monitoring function prepared by the preparation method described in the ninth aspect in the fields of food preservation and cold chain transportation.

According to the above technical solutions, the present invention provides a recyclable polymer aerogel and a preparation method, a recycling method and application thereof. The present invention also provides a recyclable cold-storage phase-change composite material, a recyclable cold-storage phase-change material with real-time temperature monitoring function and a preparation method and application thereof. Compared with the prior art, the present invention has the following advantages:
the polymer aerogel of the present invention has the characteristics of super lipophilicity, hydrophobicity and the like without crosslinking or hydrophobic treatment, and can be directly used as an oil-water separation material without any treatment; the polymer aerogel of the present invention can also be conveniently recycled in an environmentally friendly manner, with a recycle efficiency higher than 99%. The preparation and recycle process of the aerogel does not need to use any organic solvent, and has the characteristics of low energy, high efficiency, green and environmental friendliness. In addition, the polymer aerogel of the present invention has low thermal conductivity, low density and good heat resistance, can be used in many fields and has high application value. In the present invention, a polymer containing maleimide group is prepared into an aerogel for the first time, so that the application range of a copolymer containing maleic anhydride group and maleimide group is widened.

The recyclable cold-storage phase-change composite material in the present invention comprises a polymer aerogel and a phase-change material loaded in the polymer aerogel; the polymer in the polymer aerogel contains a maleic anhydride group-containing structural unit and a maleimide group-containing structural unit. The polymer aerogel can be recycled with aqueous ammonia, followed by post-treatment (including heat treatment), to obtain a recycled polymer aerogel, which can be reused. Based on this, the recyclable cold-storage phase-change composite material in the present invention can be repetitively recycled and reused. The recyclable cold-storage phase-change composite material in the present invention is not only recyclable, but also has strong cold-storage performance, and lower leakage of the phase-change material, and can keep low temperature for a long time. It can be widely used in the fields of food preservation and cold chain transportation (such as cold chain transportation of vaccine and drug).

In addition, the recyclable cold-storage phase-change material with real-time temperature monitoring function in the present invention has a sandwich structure, comprising an inner layer formed by the recyclable cold-storage phase-change composite material and an outer layer formed by the second polymer aerogel, so that it can realize heat preservation with better performance, and can better realize temperature monitoring under the condition that the preferred second polymer aerogel has photoluminescence performance and is capable of changing an optical signal along with the change of temperature. In this way, temperature monitoring and recyclability on a large scale can be achieved simultaneously.

### Description of figures

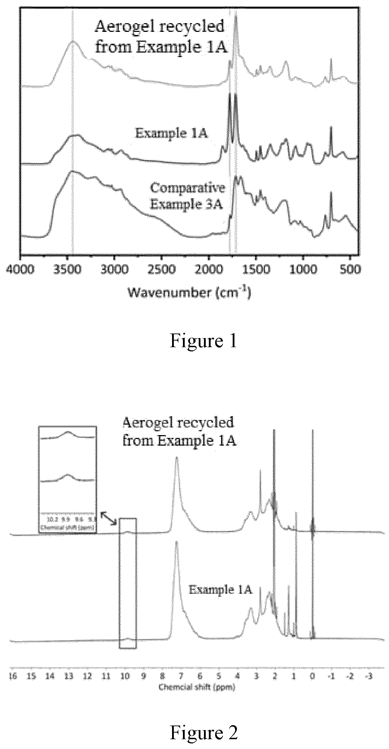

Figure 1 shows Fourier transform infrared spectrum test curves of Comparative Example 3A, Example 1A and aerogel recycled from Example 1A;
Figure 2 shows ¹H NMR spectrum curves of Example 1A and aerogel recycled from Example 1A;
   As can be seen from Figures 1 and 2, in the Fourier infrared spectrum (Figure 1), there are significant N-H stretching vibration absorption peaks and hydrogen bond characteristic absorption peaks at 3207 cm⁻¹ and 3444 cm⁻¹, indicating the presence of amide group; the asymmetric stretching vibration and symmetric stretching vibration peaks of C=O in maleic anhydride are located at 1780 cm⁻¹ and 1857 cm⁻¹, and the absorption peaks at 1716 cm⁻¹ and 1662 cm⁻¹ indicate the presence of carboxyl and amide groups. The characteristic absorption peak of C-O-C in anhydride fivemembered ring is located at 935 cm⁻¹, and the absorption peak at 1349 cm⁻¹ attributes to the C-N stretching vibration peak unique to imide ring. In the ¹H NMR spectrum (Figure 2), the chemical shift of 5 hydrogens on benzene ring is between 7.7 and 6.0 ppm, and the chemical shift of hydrogen on N-H of maleimide is between 10.2 and 9.4 ppm. Using the hydrogen on the benzene ring as an internal standard, the ratio (maleimideization rate) of maleimide to maleic anhydride (maleic anhydride in the polymer raw material is equal to the total amount of maleic anhydride + maleimide in the polymer aerogel) can be calculated by the integral area of the maleimide and the hydrogen on the benzene ring. In conclusion, from the infrared spectrum test curve of the aerogel in Figure 1 and the ¹H NMR spectrum curve of the aerogel in Figure 2, it can be determined that there is maleimide structure in the aerogel structure.

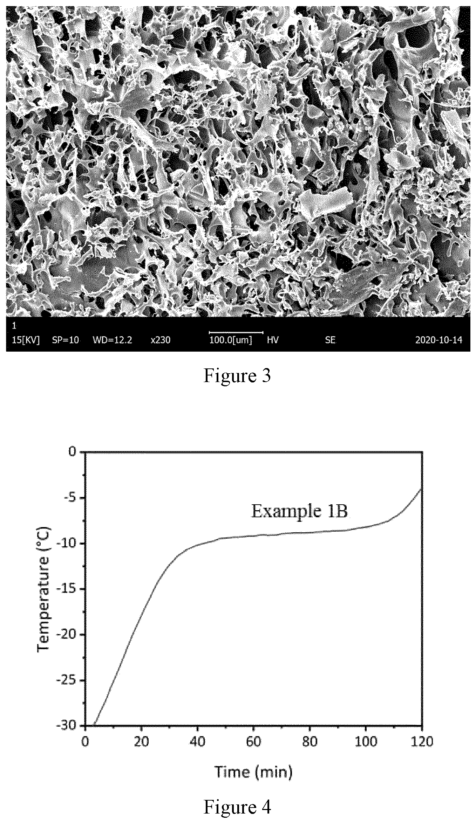

Figure 3 shows a scanning electron micrograph of the pore structure of the aerogel obtained in Example 1A, which can confirm the presence of the porous structure of the aerogel.
Figure 4 shows a temperature rise curve of the cold-storage phase-change material obtained in Example 1B;
The test result of Figure 4 shows that the prepared phase-change material can keep low temperature for a long time;

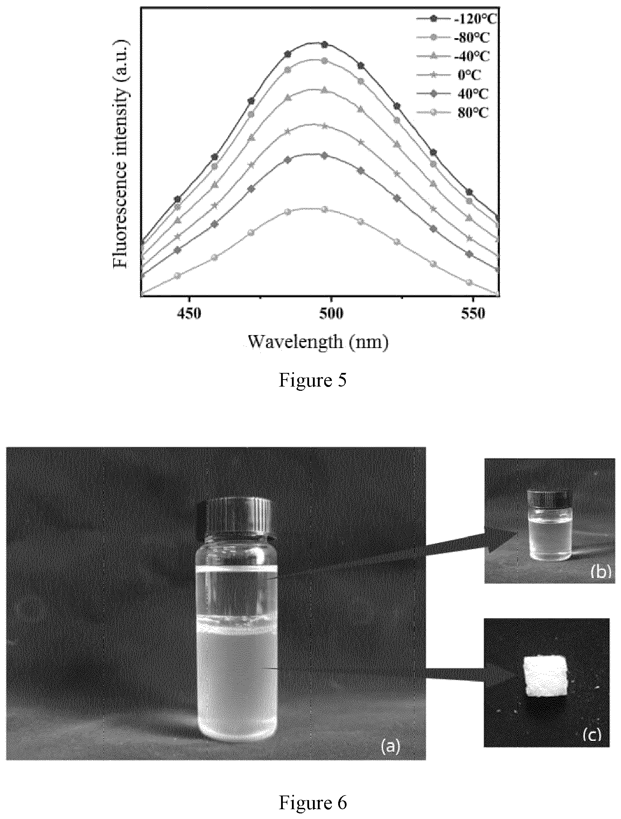

Figure 5 shows an emission spectrum of the maleimide-based aerogel in the outer layer of the cold-storage phase-change material prepared in Example 1B at an excitation wavelength of 400 nm.
Figure 5 shows that the temperature of the phase-change material can be monitored in real time by the fluorescence-temperature relationship of the surface aerogel.
Figure 6 is a schematic diagram showing the appearance of the recyclable cold-storage phase-change composite (a), the recycled phase-change material (b) and the recycled polymer aerogel (c) in the recycle Example B. It can be seen that the recyclable cold-storage phase-change composite material in the present invention can be recycled;

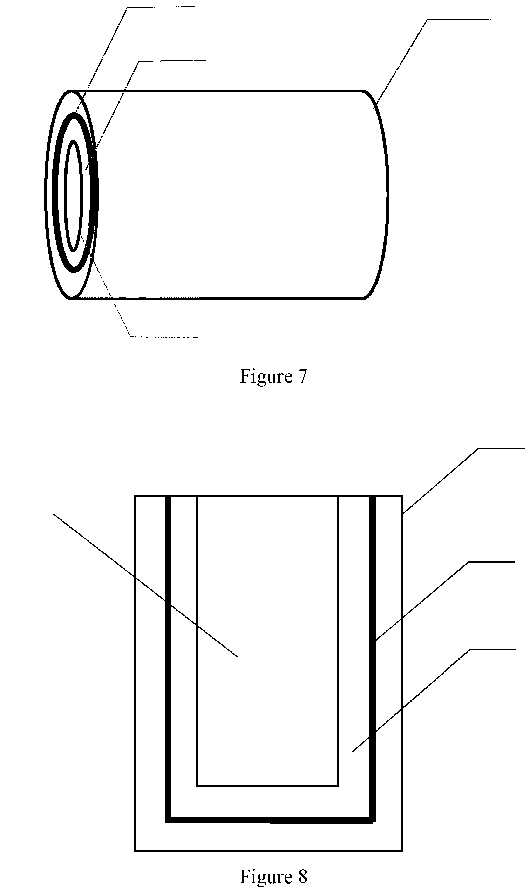

Figure 7 is a schematic diagram showing the three-dimensional structure of the aerogel phase-change cold-storage material with real-time temperature monitoring function obtained in Example 1B;
Figure 8 is a schematic diagram showing the longitudinal section structure of the aerogel phase-change cold-storage material with real-time temperature monitoring function obtained in Example 1B.

Wherein, 1 - outer layer; 2 - spacer layer; 3 - inner layer; 4 - cavity.

### Detailed description of specific embodiments

The following is a specific description of the present invention in combination with specific examples. It is necessary to point out that the following examples are only used for further explanation of the present invention, and cannot be understood as limiting the scope of protection of the present invention. Some non-essential improvements and adjustments made by those skilled in the art based on the contents of the present invention still fall within the scope of protection of the present invention.

The experimental data in the examples were determined using the following instruments and methods:
**1. Water solubility test method of aerogel:**
   1 g of aerogel was put into 100 g of water, soaked for 72 h at room temperature, taken out, dried and weighed to obtain the mass m₁. When m₁ > 99%, the polymer aerogel was considered to be water-resistant. When being completely dissolved in water, the aerogel was considered to be a water-soluble aerogel.
**2. Water contact angle test method of aerogel:**
   The water contact angle of the product obtained in the example was tested using an EASYDROP contact angle tester from Germany according to the following steps: cutting a polymer aerogel into sheets of about 10 * 10 * 2 mm³ using a thin blade, fixing an aerogel sheet on an operating platform, keeping the sample flat in the horizontal direction during the fixing process, then fixing the glass slide on a sample platform of the EASYDROP contact angle tester, dropping a water drop, which is controlled to be a volume of 4±0.02 µL with an adjusting instrument, in the center of the sample, after dropping the water drop on the surface of the aerogel for 1 min, measuring the angle from the solid-liquid interface through the interior of the water drop to the vapor-liquid interface at the three-phase interface, namely water static contact angle (briefed as water contact angle).
**3. Thermal conductivity coefficient test method of aerogel:**
   The thermal conductivity coefficient was tested using a TC3100 model hot-wire method universal thermal conductivity meter, manufactured by Xi' an Xiaxi Electronic Technology Co., Ltd., according to the following steps: firstly, cutting an aerogel into sheets of about 30 * 20 * 5 mm³ using a thin blade, covering a test probe on two sides with two aerogel sheets, and, after tightly pressing using a weight, adjusting the test temperature to be 25°C, and setting the test method to be an insulation material sample test, to obtain the thermal conductivity coefficient that was an average value of at least 5 times of test results.
**4. Fourier transform infrared spectrum characterization method of aerogel structure:**
   The aerogel in the example was tested using an IS5 Fourier transform infrared spectrometer from Nicolet, USA. The infrared spectrum of a sample was collected by a KBr tableting method, wherein a proper amount of the aerogel was taken, ground together with KBr, tableted and then tested under the conditions that the number of scans was set to 32, the spectrum collection range was 400-4000 cm, and the optical frequency was 1 cm⁻¹.
**5. ¹H NMR spectrum characterization method of aerogel structure:**
   The ¹H NMR of the aerogel sample in the example was tested using a 400-MR DD2 NMR spectrometer from Agilent, USA, wherein dimethyl sulfoxide-d6 was used as a solvent for the water-soluble aerogel, acetone-d6 was used as a solvent for the hydrophobic and water-resistant aerogel, and tetramethylsilane (TMS) was used as an internal reference.
**6. Pore structure test method of aerogel:**
   The pore structure of the aerogel sample in the example was observed using an EM30AX scanning electron microscope from COXEM, Korean according to the following steps: firstly, coating a sample to be tested on the surface with gold, then putting the coated sample on a test platform of the scanning electron microscope, and scanning an area on the sample using the scanning electron microscope to obtain a photograph of the pore structure.
**7. Heat stability test method of aerogel:**
   Taking 5 mg of the aerogel as a sample, the heat stability was tested by thermogravimetric analysis (TGA, Mettler Toledo, Switzerland). The test was carried out under a nitrogen flow with a heating rate of 20°C/min, and a temperature range from 50°C to 550°C.
**8. Glass transition temperature test method:**
   The glass transition temperature of the sample was tested using a Perkin-Elmer pyris⁻¹ Differential Scanning Calorimeter (DSC), calibrated using indium and zinc standards. 5-6 mg of the sample from an injection rod was heated from 150°C to 300°C under a nitrogen flow, and held at 300°C for 3 minutes. Next, the sample was cooled to 150°C and held for 1 min, and then heated again to 300°C. The programmed speed for all heating and cooling processes was 10°C/min. The glass transition temperature (Tg) was determined from the relevant peak in the DSC curve.
**9. Leakage test method:**
   15 g of the sample obtained in the example was taken, a filter paper was placed on a 30°C heating table, the sample was placed upside-down on the filter paper for 10 minutes, then the sample was taken off, and weighed as m (g), the leakage being m/15*100wt%; if the sample was completely melted, and could not be taken off, then the leakage was 100 wt%.
**10. Three-dimensional fluorescence spectroscopy test method:**
   The test instrument for the fluorescence spectrum of the above-mentioned nano fluorescent elastic particles was: F-7000 FLSpectrophotometer, the test method was Wavelength scan, the excitation wavelength was set to 400 nm, and the emission spectrum was tested.
**11. Cold-storage capacity test method of phase-change material:**
   10 ml of ethanol was added to a 10 ml glass vial, frozen to -30°C, and then placed in a thermostat at 25°C, while a thermocouple being inserted into the ethanol to evaluate the cold-storage effect.
**12. Adsorption capacity test method of phase-change material:**
   A whole sample was weighed before test using a balance to obtain m₁. After adsorbing a phase-change material, inverting and wiping to remove excessive phase-change material on the surface, the whole sample was weighed to obtain m₂. The adsorption capacity of the phase-change material was: m₂-m₁.
**13. Phase transition temperature test method:**
   The thermal properties of the aerogel and the phase-change material were tested using a Perkin-Elmer pyris⁻¹ Differential Scanning Calorimeter (DSC), calibrated using indium and zinc standards. For the aerogel, the sample was heated from 20°C to 150°C under a nitrogen flow, and held at 20°C and 150°C for 5 min, respectively. For the phase-change material, the sample was heated from 50°C to 300°C under a nitrogen flow, and held at 50°C and 300°C for 5 min, respectively. The programmed speed for all heating and cooling processes was 20°C/min. The latent heat of fusion ΔHm and the latent heat of solidification ΔHf as well as the melting temperature Tm and the solidification temperature Tf were determined from the relevant peaks of the DSC curve.

The raw materials used in the examples are described in Table I.

**Table I**

| Name | Description |
|---|---|
| Isoamyl acetate | Sinopharm Chemical Reagent Co., Ltd., analytically pure |
| Maleic anhydride | Sinopharm Chemical Reagent Co., Ltd., analytically pure |
| Styrene | Xilong Chemical Co., Ltd., chemically pure |
| Vinyl silicone oil | Shandong Dayi Chemical Co., Ltd., DY-V421 viscosity 180±10cP (25°C) |
| N-phenylmaleimide | Sinopharm Chemical Reagent Co., Ltd., purity 98% |
| Azodiisobutyronitrile | Acros organics Co., purification was performed using a conventional ethanol recrystallization method |
| Methanol | Beijing Chemical Plant, analytically pure |
| Ethanol | Beijing Chemical Plant, analytically pure |
| Aqueous ammonia | Purchased from Sinopharm Chemical Reagent Co., Ltd., mass concentration 25% |
| Maleic anhydride-isobutylene copolymer | Kuraray ISOBAM-08 |
| Dodecane | Shanghai Aladdin Biochemical Technology Co., Ltd., purity 98% |
| Tetradecane | Shanghai Aladdin Biochemical Technology Co., Ltd., purity 98% |

### Preparation Example 1A

500 ml of isoamyl acetate was placed in a 1000 ml three-necked flask, and nitrogen was charged to remove oxygen for 30 min. 24.5 g of maleic anhydride and 26 g of styrene were added to the flask. After complete dissolution, 0.4 g of azodiisobutyronitrile was added, and the temperature of water bath was raised to 70°C to carry out reaction for 7 h. After the reaction, the reaction solution was centrifuged at 10000 r for 10 min, the supernatant was removed, 500 ml of methanol was added, followed by stirring for 0.5 hours, and then the supernatant was removed after centrifugation, which were repeated twice. Thereafter, the reaction product was vacuum dried at 140°C for 24 h to obtain a styrene-maleic anhydride copolymer.

### Preparation Example 2A

500 ml of isoamyl acetate was placed in a 1000 ml three-necked flask, and nitrogen was charged to remove oxygen for 30 min. 24.5 g of maleic anhydride and 26.2 g of styrene were added to the flask, to which 3.69 g of Dayi DY-V421 vinyl silicone oil was added dropwise. After complete dissolution, 0.4 g of azodiisobutyronitrile was added, and the temperature of water bath was raised to 70°C to carry out reaction for 7 h. After the reaction, the reaction solution was centrifuged at 10000 r for 10 min, the supernatant was removed, 500 ml of methanol was added, followed by stirring for 0.5 hours, and then the supernatant was removed after centrifugation, which were repeated twice. Thereafter, the reaction product was vacuum dried at 140°C for 24 h to obtain a styrene-maleic anhydride-vinyl silicone oil copolymer.

### Preparation Example 3A

To a glass bottle with a cap, 91.5 g of water was added, and then 3.5 g of aqueous ammonia with mass fraction of 25% and 5 g of the maleic anhydride-styrene copolymer obtained in Preparation Example 1A were added. After tightly screwing the cap, the glass bottle was put into an oven, kept at 95°C for 4 h, and then taken out to obtain a uniform polymer solution with mass fraction of 5%. The polymer solution was air dried at room temperature to obtain a polymer containing maleamic acid- and ammonium maleate-groups.

### Example 1A

To a glass bottle with a cap, 91.5 g of water was added, and then 3.5 g of aqueous ammonia with mass fraction of 25% and 5 g of the maleic anhydride-styrene copolymer were added. After tightly screwing the cap, the glass bottle was put into an oven, kept at 95°C for 4 h, and then taken out to obtain a uniform polymer solution with mass fraction of 5%.

The polymer solution was poured into 6 molds, with 15 ml of the solution per mold, and frozen for 2 h in a refrigerator at -30°C, then the frozen sample was transferred into a freeze drier for freeze drying (below -30°C, below 10 Pa) for 72 h to obtain a water-soluble polymer;

The water-soluble polymer was placed in a thermostat at 180°C for heat treatment for 2 h, for dehydrating and deaminating to obtain a maleimide-based aerogel (namely the polymer aerogel according to the present invention).

### Comparative Example 1A

The preparation steps were identical to those of Example 1A except that 91.5 g of water and 3.5 g of aqueous ammonia with mass fraction of 25% in Example 1A were replaced by 94 g of water and 1 g of sodium hydroxide.

### Comparative Example 2A

The preparation steps were identical to those of Example 1A except that 91.5 g of water and 3.5 g of aqueous ammonia with mass fraction of 25% in Example 1A were replaced by 94 g of water and 2 g of sodium hydroxide.

### Comparative Example 3A

The preparation steps were identical to those of Example 1A except that the heat treatment step in Example 1A was not carried out.

### Comparative Example 4A

The preparation steps were identical to those of Example 1A except that maleic anhydride in the maleic anhydride-styrene copolymer in Example 1A was replaced by N-phenylmaleimide.

### Example 2A

The preparation steps were identical to those of Example 1A except that 91.5 g of water, 3.5 g of aqueous ammonia with mass fraction of 25% and 5 g of the maleic anhydride-styrene copolymer in Example 1A were replaced by 94.9 g of water, 2.1 g of 25% aqueous ammonia and 3 g of the maleic anhydride-styrene copolymer.

### Example 3A

The preparation steps were identical to those of Example 1A except that 91.5 g of water, 3.5 g of aqueous ammonia with mass fraction of 25% and 5 g of the maleic anhydride-styrene copolymer in Example 1A were replaced by 98.3 g of water, 0.7 g of 25% aqueous ammonia and 1 g of the maleic anhydride-styrene copolymer.

### Example 4A

The preparation steps were identical to those of Example 1A except that 5 g of the maleic anhydride-styrene copolymer in Example 1A was replaced by 5 g of a maleic anhydride-isobutylene copolymer (Kuraray ISOBAM-08).

### Example 5A

The preparation steps were identical to those of Example 1A except that 5 g of the maleic anhydride-styrene copolymer in Example 1A was replaced by 5 g of the polymer obtained in Preparation Example 3A.

### Example 6A

The preparation steps were identical to those of Example 1A except that the maleic anhydride copolymer in Example 1A was replaced by the styrene-maleic anhydride-vinyl silicone oil copolymer obtained in Preparation Example 2A.

### Example 7A

According to the method in Example 5A, the preparation steps were carried out in the same way as that in Example 5A except that 3.5 g of aqueous ammonia with mass fraction of 25% was replaced by 3.5 g of water, the glass bottle was replaced by a reactor kettle with a polytetrafluoroethylene inner tank, the temperature of the oven in which the glass bottle was kept was changed from 95°C to 150°C, and the duration at which the glass bottle was kept in the oven was changed from 4 h to 12 h, so that a uniform polymer solution with mass fraction of 5% was obtained, and the heat treatment temperature was changed to 130°C.

### Example 8A

According to the method in Example 5A, the preparation steps were carried out in the same way as that in Example 5A except that 3.5 g of aqueous ammonia with mass fraction of 25% and 91.5 g of water were replaced by 40 g of aqueous ammonia with mass fraction of 25% and 55 g of water, the temperature of the oven in which the glass bottle was kept was changed from 95°C to 20°C, the duration at which the glass bottle was kept in the oven was changed from 4 h to 0.5 h, and the heat treatment temperature in Example 1A was changed to 200°C.

### Test method for cycle efficiency of aerogel obtained in the example and recycling method of aerogel (Recycle Example A)

The water-resistant maleimide-based aerogel of the present invention was weighed as a mass, m₁. To a closed glass bottle with a cap, 91.5 g of water was added, and then 3.5 g of aqueous ammonia with mass fraction of 25% and 5 g (i.e., m₁) of the water-resistant maleimide-based aerogel were added. After tightly screwing the cap, the closed glass bottle was put into an oven, kept at 95°C for 2 h, to obtain a uniform recycled polymer solution. The polymer solution was poured into 6 molds, with 15 ml of the solution per mold, and frozen for 2 h in a refrigerator at -30°C, then the frozen sample was transferred into a freeze drier for freeze drying for 72 h to obtain a recycled water-soluble polymer. The recycled water-soluble polymer was placed in a thermostat at 180°C for heat treatment for 2 h, for dehydrating and deaminating to obtain a recycled water-resistant maleimide-based aerogel (namely the recycled polymer aerogel according to the present invention).

The recycled water-resistant maleimide-based aerogel was weighed as a mass, m₂, the cycle efficiency being m₂/m₁*100%.

Wherein, the performances of the water-resistant maleimide-based aerogels (polymer aerogel) in Example 1A after recycle are listed in Table 1A, Table 2A, with the corresponding sample name of Example 1A (recycle 1) after one-time recycle, and the corresponding sample name of Example 1A (recycle 2) after subjecting the recycled aerogel to the above-mentioned recycle once more.

As verified, the polymer aerogel (maleimide-based aerogel) in Example 1A of the present invention has good heat resistance, with a glass transition temperature of around 250°C, and a decomposition temperature of around 300°C. The heat resistance of the aerogel prepared by the recycled polymer is higher than that before recycle, which proves that the polymers before and after recycle of the aerogel both have good heat resistance, and the recycling process is green and environmentally friendly.

### Test Example

The water solubility test results of the aerogels prepared in Examples 1A-6A and Comparative Examples 1A-4A are listed in Table 1A, and the water contact angle, cycle efficiency, thermal conductivity coefficient and density test results of the aerogels prepared in Examples 1A-8A are listed in Table 2A; the infrared spectrum test curves of Comparative Example 3A, Example 1A and aerogel recycled from Example 1A are shown in Figure 1, the NMR spectrum curves of the Example and the Comparative Example are shown in Figure 2, and the scanning electron micrograph of the pore structure of the aerogel obtained in Example 1A is shown in Figure 3. From the infrared spectrum test curves of aerogels in Figure 1 and the ¹H NMR spectrum curves of aerogels in Figure 2, it can be determined that there is maleimide structure in the polymer aerogel structure.

**Table 1A**

| Sample name | Water solubility |
|---|---|
| Example 1A | Water-resistant |
| Comparative Example 1A | Water-soluble |
| Comparative Example 2A | Water-soluble |

| Comparative Example 3A | Water-soluble |
|---|---|
| Comparative Example 4A | Unable to prepare aerogel |
| Example 2A | Water-resistant |
| Example 3A | Water-resistant |
| Example 4A | Water-resistant |
| Example 5A | Water-resistant |
| Example 6A | Water-resistant |
| Example 1A (recycle 1) | Water-resistant |
| Example 1A (recycle 2) | Water-resistant |

**Table 2A**

| Sample name | Maleimidei zation rate | Water contact angle | Cycle efficiency | Thermal conductivity coefficient/(W /(m•k)) | Density (Kg/m³) |
|---|---|---|---|---|---|
| Example 1A | 43.6% | 138.1° | 99.2% | 0.0362 | 72.3 |
| Example 2A | 41.8% | 135.6° | 99.5% | 0.0316 | 44.3 |
| Example 3A | 40.7% | 132.8° | 99.7% | 0.0274 | 19.2 |
| Example 4A | 38.6% | 125.4° | 99.3% | 0.0368 | 73.5 |
| Example 5A | 44.5% | 138.2° | 99.1% | 0.0363 | 72.4 |
| Example 6A | 42.9% | 138.4° | 99.1% | 0.0364 | 71.8 |
| Example 7A | 44.4% | 138.1° | 99.0% | 0.0361 | 72.3 |
| Example 8A | 44.5% | 138.3° | 99.1% | 0.0364 | 72.3 |
| Example 1A (recycle 1) | 52.3% | 138.5° | 99.3% | 0.0362 | 72.3 |
| Example 1A (recycle 2) | 57.4% | 139.2° | 99.3% | 0.0364 | 72.5 |

| | | | | | |
|---|---|---|---|---|---|
| Notes: The maleimideization rate in Table 2A is the mole proportion of the maleimide group-containing structural unit, based on 100% of the total mole amount of the maleic anhydride group-containing structural unit and the maleimide group-containing structural unit. | | | | | |

The comparison between the test results of Examples 1A-6A and Comparative Examples 1A-4A in Table 1A shows that the aerogels prepared in the present invention are water-resistant and hydrophobic, that a hydrophobic and water-resistant aerogel cannot be prepared by a non-volatile base such as sodium hydroxide, and that a hydrophobic aerogel also cannot be prepared by dissolving N-phenylmaleimide in aqueous ammonia directly because it is insoluble in ammonia water.

As can be seen from the water contact angle, cycle efficiency, thermal conductivity coefficient and density test results of Examples 1A-6A in Table 2A, the aerogels have lower thermal conductivity coefficient and density, and can be used as a direct substitute for current low density insulation materials. As the aerogel samples have a quite high cycle efficiency, they are more green and environmentally friendly. The aerogels, which have good hydrophobicity, can be used as oil-water separation materials. Due to the porous structure on the surface (Figure 3), the aerogels can be used as a carrier for loading, e.g., organic phase-change materials, catalysts and the like, and they can also be used as filtering materials. The water contact angle, cycle efficiency, thermal conductivity coefficient and density test results of the polymer aerogels in Example 7A, Example 8A are similar to those of Example 5A.

### Preparation Example 1B

Preparation of polymer in the examples of the present invention: 500 ml of isoamyl acetate was placed in a 1000 ml three-necked flask, and nitrogen was charged to remove oxygen for 30 min. 24.5 g of maleic anhydride and 26 g of styrene were added to the flask. After complete dissolution, 0.4 g of azodiisobutyronitrile was added, and the temperature of water bath was raised to 70°C to carry out reaction for 7 h. After the reaction, the reaction solution was centrifuged at 10000 r for 10 min, the supernatant was removed, 500 ml of methanol was added, followed by stirring for 0.5 hours, and then the supernatant was removed after centrifugation, which were repeated twice. Thereafter, the reaction product was vacuum dried at 140°C for 24 h to obtain a styrene-maleic anhydride copolymer.

### Example 1B

To a glass bottle with a cap, 91.5 g of water was added, and then 3.5 g of aqueous ammonia with mass fraction of 25% and 5 g of the maleic anhydride-styrene copolymer were added. After tightly screwing the cap, the glass bottle was put into an oven, kept at 95°C for 4 h, and then taken out to obtain a uniform polymer solution with mass fraction of 5%.

15 ml of the polymer solution was poured into a cylindrical aluminum foil spacer layer with a closed bottom, a 10 ml cylindrical glass vial (as a mold) was fixed at the central position of the aluminum foil spacer layer, with the distance of the periphery and bottom of the glass vial from the inner wall of the aluminum foil spacer layer being about 9 mm, while keeping the top of the glass vial to be about 1 mm higher than the solution, and then the aluminum foil spacer layer was fixed at the central position of a 50 ml (cylindrical) beaker (as a pre-freezing container) filled with 20 ml of the polymer solution, while keeping the bottom of the spacer layer to be about 5 mm away from the beaker, followed by freezing in a refrigerator at -30°C for 2 h. The frozen sample was transferred into a freeze drier for freeze drying (below -30°C, below 10 Pa) for 72 h to obtain a water-soluble polymer;

The water-soluble polymer was placed in an oven at 180°C for heat treatment for 2 h, for dehydrating and deaminating to obtain maleimide-based polymer aerogels (namely the polymer aerogels according to the present invention) in both the inner and outer layers.

It is determined by infrared spectrum test and ¹H NMR test that there is maleimide structure in the polymer aerogel structure. As tested, the mole proportion of the maleimide group-containing structural unit is 43.6%, based on 100% of the total mole amount of the maleic anhydride group-containing structural unit and the maleimide group-containing structural unit; the polymer aerogel has a water contact angle of 138.1°, a thermal conductivity coefficient of 0.0362 W/(m.k), and a density of 72.3 Kg/m³.

11 ml of dodecane phase-change material was injected into the aerogel of the inner layer until it is full, followed by inverting and wiping to remove excessive phase-change material on the surface of the aerogel phase-change composite material, to obtain a maleimide-based copolymer aerogel phase-change cold-storage material.

In use, vaccines and the like may be placed in the glass vial.

### Example 2B

To a glass bottle with a cap, 91.5 g of water was added, and then 3.5 g of aqueous ammonia with mass fraction of 25% and 5 g of the maleic anhydride-styrene copolymer were added. After tightly screwing the cap, the glass bottle was put into an oven, kept at 95°C for 4 h, and then taken out to obtain a uniform polymer solution with mass fraction of 5%.

15 ml of the polymer solution was poured into a polytetrafluoroethylene cylindrical container (a volume of 25 mL) with a bottom made of copper material, a 10 mL cylindrical glass vial (as a mold) was fixed at the center of the polytetrafluoroethylene cylindrical container, with the distance of the periphery and bottom of the glass vial from the inner wall of the polytetrafluoroethylene cylindrical container being about 9 mm, while keeping the top of the glass vial to be about 1 mm higher than the solution, then the polytetrafluoroethylene cylindrical container was placed on a copper column immersed in liquid nitrogen, after full freezing, an ice column of the frozen polymer solution was transferred into a cylindrical aluminum foil spacer layer, and then the aluminum foil spacer layer was fixed at the central position of a 50 ml cylindrical beaker (as a pre-freezing container) filled with 20 ml of the polymer solution, while keeping the bottom of the spacer layer to be about 5 mm away from the beaker, followed by freezing in a refrigerator at -30°C for 2 h. The frozen sample was transferred into a freeze drier for freeze drying (below -30°C, below 10 Pa) for 72 h to obtain a water-soluble polymer;

The water-soluble polymer was placed in an oven at 180°C for heat treatment for 2 h, for dehydrating and deaminating to obtain maleimide-based polymer aerogels in both the inner and outer layers, wherein the maleimide-based polymer aerogel in the inner layer is an anisotropic aerogel.

11 ml of dodecane phase-change material was injected into the aerogel of the inner layer until it is full, followed by inverting and wiping to remove excessive phase-change material on the surface of the aerogel phase-change composite material, to obtain a maleimide-based copolymer aerogel phase-change cold-storage material.

### Example 3B

The preparation steps were identical to those of Example 1B except that the preparation steps of the polymer solution in Example 1B were changed as follows: to a glass bottle with a cap, 94.9 g of water was added, and then 2.1 g of aqueous ammonia with mass fraction of 25% and 3 g of the maleic anhydride-styrene copolymer were added, and, after tightly screwing the cap, the glass bottle was put into an oven, kept at 95°C for 4 h, and then taken out to obtain a uniform polymer solution with mass fraction of 3%, wherein the amount of dodecane added was 11 ml.

### Example 4B

The preparation steps were identical to those of Example 2B except that dodecane in Example 2B was replaced by tetradecane.

### Example 5B

To a reactor kettle with a polytetrafluoroethylene inner tank, 80 g of water was added, and then 3.5 g of aqueous ammonia with mass fraction of 25% and 5 g of maleic anhydride-isobutylene copolymer (Kuraray ISOBAM-08, molecular weight of about 300,000) were added. After tightly closed, the reactor kettle was put into an oven, kept at 95°C for 4 h, and then taken out to obtain a uniform polymer solution. The polymer solution was air dried at room temperature to obtain a polymer containing maleamic acid- and ammonium maleate-groups.

To a glass bottle with a cap, 1 g of the above polymer was added, 98.96 g of water, and then 0.04 g of aqueous ammonia with mass fraction of 25% were added. After tightly screwing the cap, the glass bottle was put into an oven, kept at 20°C for 0.5 h, and then taken out to obtain a uniform polymer solution with mass fraction of 1%.

15 ml of the polymer solution was poured into a cylindrical aluminum foil spacer layer with a closed bottom, a 10 ml cylindrical glass vial (as a mold) was fixed at the central position of the aluminum foil spacer layer, with the distance of the periphery and bottom of the glass vial from the inner wall of the aluminum foil spacer layer being about 9 mm, while keeping the top of the glass vial to be about 1 mm higher than the solution, then the aluminum foil spacer layer was fixed at the central position of a 50 ml polytetrafluoroethylene cylindrical container filled with 20 ml of the 0.5% polymer solution prepared in Example 1B, while keeping the bottom of the spacer layer to be about 5 mm away from the bottom of the polytetrafluoroethylene cylindrical container, and then the polytetrafluoroethylene cylindrical container was placed on a copper column in a liquid nitrogen bath. After completion of pre-freezing, the frozen sample was put into a freeze drier for freeze drying (below -30°C and below 10 Pa) for 72 h, to obtain an anisotropic water-soluble polymer. The water-soluble polymer was placed in an oven at 130°C for heat treatment for 2 h, for dehydrating and deaminating to obtain a maleimide-based polymer aerogel. 11 ml of dodecane phase-change material was injected into the aerogel of the inner layer until it is full, followed by inverting and wiping to remove excessive phase-change material on the surface of the aerogel phase-change composite material, to obtain a maleimide-based copolymer aerogel phase-change cold-storage material.

The test results of leakage, phase-change temperature and phase transition latent heat are similar to those of Example 2B.

### Example 6B

To a reactor kettle with a polytetrafluoroethylene inner tank, 80 g of water was added, and then 3.5 g of aqueous ammonia with mass fraction of 25% and 5 g of a maleic anhydride-isobutylene copolymer (Kuraray ISOBAM-08, molecular weight of about 300,000) were added. After tightly closed, the reactor was put into an oven, kept at 95°C for 4 h, and then taken out to obtain a uniform polymer solution. The polymer solution was air dried at room temperature to obtain a polymer containing maleamic acid- and ammonium maleate-groups.

To a glass bottle with a cap, 91.5 g of water was added, and then 3.5 g of aqueous ammonia with mass fraction of 25% and 5 g of the polymer containing maleamic acid- and ammonium maleate-groups obtained above were added. After tightly screwing the cap, the glass bottle was put into an oven, kept at 150°C for 10 h, and then taken out to obtain a uniform copolymer solution with mass fraction of 5%.

The preparation steps were identical to those of Example 2B except that 15 ml of the polymer solution in Example 2B was replaced by the above-mentioned 5% copolymer solution in this example.

The maleimide-based polymer aerogel obtained by dehydrating and deaminating was tested, and then a phase-change material was injected into it according to the step in Example 2B.

It is determined by infrared spectrum test and ¹H NMR test that there is maleimide structure in the polymer aerogel structure. As tested, the mole proportion of the maleimide group-containing structural unit is 38.7%, based on 100% of the total mole amount of the maleic anhydride group-containing structural unit and the maleimide group-containing structural unit; the polymer aerogel has a water contact angle of 127.6°, a thermal conductivity coefficient of 0.0369 W/(m.k), and a density of 73.1 Kg/m³.

The test results of leakage, phase-change temperature and phase transition latent heat of the phase-change material are similar to those of Example 2B

### Recycle Example B

To a closed glass bottle with a cap, 5 g of the aerogel phase-change material prepared in Example 2B was added, and then 1 g of aqueous ammonia with mass fraction of 25% and 15 g of water were added. The glass bottle was kept in an oven at 95°C for 2 h to obtain a liquid (a in Figure 6), and then the liquid was separated by a separating funnel to obtain a recycled polymer aqueous solution (c in Figure 6) and a phase-change material (b in Figure 6).

Using the obtained polymer aqueous solution as a raw material for preparing aerogel, and the phase-change material as a raw material for preparing phase-change material, a phase-change composite material was prepared according to the method of

### Example 2B.

The test results of leakage, phase-change temperature and phase transition latent heat are similar to those of Example 2B.

**Table 1B**

| Sample name | Adsorption capacity to phase-change material (g) | Leakage |
|---|---|---|
| Example 1B | 6.21 | 3.8wt% |
| Example 2B | 6.64 | 2.9wt% |
| Example 3B | 7.57 | 4.2wt% |
| Example 4B | 6.72 | 3.0wt% |
| Example 5B | 6.65 | 2.9wt% |
| Example 6B | 6.62 | 2.9wt% |
| Recycle Example B | 6.63 | 2.9wt% |

It can be seen from Table 1B that the recyclable cold-storage phase-change composite materials in the examples of the present invention have higher adsorption capacity to phase-change material, and lower leakage of phase-change material, which can be widely used in the fields of food preservation and cold chain transportation (such as cold chain transportation of vaccine and drug).

**Table 2B**

| Sample name | Melting temperature Tm(°C) | Melting latent heat (kJ/kg) | Solidification temperature Tf (°C) | Solidification latent heat (kJ/kg) |
|---|---|---|---|---|
| Example 2B | -9.69 | 165.9 | -10.96 | 165.3 |
| Example 4B | 4.53 | 197.6 | 1.65 | 196.8 |
| Example 5B | -9.70 | 166.1 | -10.95 | 165.2 |
| Example 6B | -9.68 | 165.8 | -10.99 | 165.0 |
| Recycle Example B | -9.70 | 165.7 | -10.92 | 165.1 |

It can be seen from Table 2B that the porous aerogels in the present invention result in a very little loss of latent heat of the phase-change materials, and can be used to prepare phase-change composite materials with high cold-storage capacity and low leakage.

It should be noted that the above-mentioned examples are only used to explain the present invention, and do not constitute any limitation to the present invention. The present invention has been described with reference to typical examples, but it should be understood that the words used herein are descriptive and explanatory words, rather than restrictive words. Modifications can be made to the present invention within the scope of the claims, and revisions can be made to the present invention without departing from the scope and spirit of the present invention. Although the present invention described herein relates to specific methods, materials, and examples, it does not mean that the present invention is limited to the specific examples disclosed herein. On the contrary, the present invention can be extended to all other methods and applications with the same functionality.

All publications, patent applications, patents, and other references mentioned in the present specification are herein incorporated by reference in their entirety. Unless defined otherwise, all technical and scientific terms used in the present specification have the same meaning as commonly understood by those skilled in the art. In case of conflict, the definitions in the present specification should prevail.

When in the present specification materials, substances, methods, steps, devices or components and the like are addressed using the prefix "known to those skilled in the art", "prior art" or the like, the objects so addressed not only encompass those commonly used in the art at the time of filing the present application, but also include those that are currently not commonly used but will be recognized in the art as suitable for similar purposes.

The endpoints of the ranges and any values disclosed in present application documents are not to be limited to the precise ranges or values, and these ranges or values should be understood to encompass values similar to these ranges or values. For numerical ranges, the endpoint values of each range, the endpoint values of each range and individual point values, and individual point values can be combined with each other to obtain one or more new numerical ranges, which should be considered as specifically disclosed herein. In the following text, various technical solutions can be combined with each other in principle to obtain new technical solutions, which should also be considered as specifically disclosed herein.

In the context of the present specification, for any matters or issues not mentioned, what are known in the art shall apply directly without any changes, except where explicitly stated.

Moreover, any embodiments described herein can be freely combined with one or more other embodiments described herein, and the technical solutions or technical concepts resulting therefrom are all considered as part of the original disclosure or original description of the present invention, and should not be considered as new contents not disclosed or contemplated herein, unless those skilled in the art consider the combination to be clearly unreasonable.

## Claims

1. A polymer aerogel, wherein the polymer contains a maleic anhydride group-containing structural unit and a maleimide group-containing structural unit, wherein the maleic anhydride group refers to 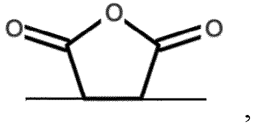 the maleimide group refers to

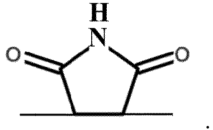

2. The polymer aerogel as claimed in claim 1, **characterized in that**:
the mole proportion of the maleimide group-containing structural unit in the polymer is 5%-70%, preferably 10%-60%, more preferably 20%-50%, based on 100% of the total mole amount of the maleic anhydride group-containing structural unit and the maleimide group-containing structural unit.

3. The polymer aerogel as claimed in claim 1, **characterized in that**:
the polymer is derived from a polymer raw material containing one or more of maleic anhydride-, maleimide-, maleic acid and its ammonium salt-, maleamic acid and its ammonium salt-group-containing structural units; preferably, the polymer raw material is a copolymer of a polymerizable monomer including one or more of maleic anhydride, maleimide, maleic acid and its ammonium salt, maleamic acid and its ammonium salt with an olefin monomer; more preferably, the olefin monomer is at least one of α-methyl styrene, styrene, isobutylene.

4. The polymer aerogel as claimed in claim 1, **characterized in that**:
the polymer aerogel is capable of being dissolved in aqueous ammonia at 0-150°C to form a polymer aqueous solution; preferably, the polymer aqueous solution can be recycled through pre-freezing, freeze-drying and heat treatment to obtain a polymer aerogel; and/or,
the polymer aerogel has a thermal conductivity coefficient of 0.025-0.05 W/(m.k), preferably 0.027-0.04 W/(m.k); and/or
the polymer aerogel has a density of 10-100 kg/m³, preferably 15-75 kg/m³; and/or
the polymer aerogel is a three-dimensional porous material.

5. The polymer aerogel as claimed in claim 1, **characterized in that**:
the polymer aerogel has a static water contact angle of 100° or greater, preferably 110° or greater, more preferably 135°or greater; and/or
the polymer aerogel is insoluble in water, preferably, the polymer aerogel is soaked in water at 20-40°C for 24 h, preferably 72 h, more preferably 168 h, without dissolving to form an aqueous solution of the polymer.

6. The polymer aerogel as claimed in one of claims 1-5, **characterized in that**:
the polymer aerogel is prepared by reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating.

7. A preparation method of the polymer aerogel as claimed in one of claims 1-6, which comprises reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating to obtain the polymer aerogel.

8. The preparation method as claimed in claim 7, **characterized in that** it comprises the following steps:
(1) reacting the polymer raw material with aqueous ammonia under a closed condition to obtain a polymer aqueous solution;
(2) subjecting the polymer aqueous solution obtained in step (1) to pre-freezing and then to freeze-drying, to obtain a water-soluble polymer;
(3) subjecting the water-soluble polymer obtained in step (2) to heat treatment, to obtain the polymer aerogel.

9. The preparation method as claimed in claim 8, **characterized in that**:
in step (1),
based on 100% of the total mass of the reaction system, the mass fraction of the polymer raw material is 0.1%-30%, preferably 0.5%-10%, more preferably 1%-5%, and the mass fraction of ammonia by mass of ammonia in aqueous ammonia is 0.0001%-30%, preferably 0.01%-10%, more preferably 0.1%-1%, the balance being water;
and/or, the reaction conditions include that: the reaction temperature is 0-200°C, preferably 50-150°C, more preferably 80-100°C, and/or, the reaction time is 0.01-100 h, preferably 0.5-10 h, more preferably 1-5 h.

10. The preparation method as claimed in claim 8, **characterized in that**:
in step (2),
the polymer aqueous solution obtained in step (1) is subjected to pre-freezing in a mold, preferably, the cold source temperatures in various directions of the solution during pre-freezing are the same or different; and/or
the freeze-drying conditions include that: the temperature is preferably -10°C or lower; the vacuum degree is preferably 1000 Pa or lower.

11. The preparation method as claimed in claim 8, **characterized in that**:
in step (3), the heat treatment conditions include that: the temperature is 100-300°C, preferably 130-200°C, more preferably 150-190°C, and/or, the time is 0.1-10 h, preferably 0.5-3 h, more preferably 1-2 h.

12. The preparation method as claimed in one of claims 7-11, **characterized in that**:
the polymer raw material is a copolymer of a polymerizable monomer including one or more of maleic anhydride, maleimide, maleic acid and its ammonium salt, maleamic acid and its ammonium salt with an olefin monomer; preferably, the olefin monomer comprises at least one of α-methyl styrene, styrene, isobutylene.

13. The preparation method as claimed in one of claims 7-11, **characterized in that**:
the polymer raw material is at least one of styrene-maleic anhydride copolymer, styrene-maleic anhydride-vinyl silicone oil copolymer, maleic anhydride-isobutylene copolymer; preferably, the polymer raw material is at least one of styrene-maleic anhydride copolymer, maleic anhydride-isobutylene copolymer.

14. A recycling method of a polymer aerogel, wherein the polymer aerogel is the polymer aerogel as claimed in one of claims 1-6 or the polymer aerogel prepared by the preparation method as claimed in one of claims 7-13, the recycling method comprising the steps of: mixing-reacting the polymer aerogel and/or a material containing the polymer aerogel with aqueous ammonia under a closed condition until an aqueous solution containing the recycled polymer is obtained, and optionally removing insoluble substances to obtain an aqueous solution of the recycled polymer;
preferably, the mixing-reaction temperature is 0-200°C, preferably 50-150°C, more preferably 80-100°C and/or, the mixing-reaction time is 0.01-100 h, preferably 0.5-10 h, more preferably 1-5 h.

15. The recycling method as claimed in claim 14, **characterized in that**:
the recycling method also comprises recycling the aqueous solution of the recycled polymer by pre-freezing, freeze-drying, heat treatment, to obtain a polymer aerogel; preferably,
the cold source temperatures in various directions of the solution during pre-freezing are the same or different; and/or,
the freeze-drying conditions include that: the temperature is -10°C or lower; and/or, the vacuum degree is 1000 Pa or lower; and/or
the heat treatment conditions include that: the temperature is 100-300°C, preferably 130-200°C, more preferably 150-190°C; and/or, the time is 0.1-10 h, preferably 0.5-3 h, more preferably 1-2 h.

16. A recycled polymer aerogel obtained by the recycling method as claimed in claim 14 or 15.

17. Application of the polymer aerogel is the polymer aerogel as claimed in one of claims 1-6, the polymer aerogel prepared by the preparation method as claimed in one of claims 7-13 or the recycled polymer aerogel as claimed in claim 16 as a porous material, preferably as a carrier, a filter material, for adsorbing an organic phase-change material, or as an oil-water separation material, a thermal insulation material.

18. A recyclable cold-storage phase-change composite material, which comprises a polymer aerogel and a phase-change material loaded in the polymer aerogel, wherein the polymer aerogel is the polymer aerogel as claimed in one of claims 1-6, the polymer aerogel prepared by the preparation method as claimed in one of claims 7-13 or the recycled polymer aerogel as claimed in claim 16.

19. The recyclable cold-storage phase-change composite material as claimed in claim 18, **characterized in that**:
based on 100% of the total mass of the recyclable cold-storage phase-change composite material, the amount of the polymer aerogel is 2%-20%, preferably 4%-10%, and the amount of the phase-change material is 80%-98%, preferably 90%-96%; and/or
the phase-change material is an organic phase-change material, preferably, the organic phase-change material has a phase-change temperature of (-10)-30°C, and/or a latent heat of phase-change is 55-280 J/g; more preferably, the organic phase-change material is an alkane organic phase-change material, and most preferably at least one of decane, dodecane and tetradecane; and/or
the leakage of the phase-change material in the recyclable cold-storage phase-change composite material is less than 10 wt%, preferably less than 5 wt%, more preferably less than 2 wt% under the temperature conditions where the phase-change material is in a liquid state.

20. The recyclable cold-storage phase-change composite material as claimed in claim 18, **characterized in that**:
the polymer aerogel is an anisotropic aerogel, preferably an anisotropic aerogel obtained using different cold source temperatures in a single direction during pre-freezing; and/or
the polymer aerogel is capable of being dissolved in aqueous ammonia at 0-150°C to form a solution containing the polymer, preferably, the solution containing the polymer can be recycled through pre-freezing, freeze-drying and heat treatment to obtain a polymer aerogel; and/or
the polymer aerogel has a density of 100 kg/m³ or less, preferably 15-80 kg/m³.

21. The recyclable cold-storage phase-change composite material as claimed in one of claims 18-20, **characterized in that**:
the polymer aerogel is prepared by reacting a polymer raw material containing one or more of maleic anhydride-, maleimide-, maleic acid and its ammonium salt-, maleamic acid and its ammonium salt-group-containing structural units with aqueous ammonia under a closed condition, followed by pre-freezing, freeze-drying, heat treatment for dehydrating and deaminating; preferably,
the cold source temperatures in various directions of the solution during pre-freezing are the same or different, more preferably, the cold source temperatures in various directions of the solution during pre-freezing are different, such that an anisotropic aerogel is obtained;
most preferably, the cold source temperatures in a single direction of the solution during pre-freezing are different, such that an anisotropic aerogel is obtained.

22. A preparation method of the recyclable cold-storage phase-change composite material as claimed in one of claims 18-21, which comprises loading the phase-change material in the polymer aerogel.

23. The preparation method as claimed in claim 22, **characterized in that** it comprises the following steps:
(1) reacting a polymer raw material containing one or more of maleic anhydride-, maleimide-, maleic acid and its ammonium salt-, maleamic acid and its ammonium salt-group-containing structural units with aqueous ammonia under a closed condition to obtain a polymer aqueous solution;
(2) subjecting the polymer aqueous solution obtained in step (1) to pre-freezing and then to freeze-drying, to obtain a water-soluble polymer;
(3) subjecting the water-soluble polymer obtained in step (2) to heat treatment, to obtain the polymer aerogel;
(4) loading the phase-change material in the polymer aerogel.

24. The preparation method as claimed in claim 23, **characterized in that**:
in step (1), based on 100% of the total mass of the reaction system, the mass fraction of the polymer raw material is 0.1%-30%, preferably 1%-10%, more preferably 2%-5%, and the mass fraction of ammonia by mass of ammonia in aqueous ammonia is 0.001%-30%, preferably 0.01%-10%, more preferably 0.1%-1%, the balance being water; and/or
at the pre-freezing stage, subjecting the polymer aqueous solution obtained in step (1) to different cold source temperatures in various directions, preferably to different cold source temperatures in a single direction; and/or
before pre-freezing in step (2), inserting the mold into the polymer aqueous solution obtained in step (1), and after the heat treatment in step (3), optionally taking out the mold to obtain a polymer aerogel having a cavity, and in step (4), loading the phase-change material in the polymer aerogel.

25. A recyclable cold-storage phase-change material with real-time temperature monitoring function, wherein the recyclable cold-storage phase-change material has a layered structure, comprising an inner layer formed by the recyclable cold-storage phase-change composite material as claimed in one of claims 18-21 or the recyclable cold-storage phase-change composite material prepared by the preparation method as claimed in one of claims 22-24, and an outer layer formed by a second polymer aerogel.

26. The recyclable cold-storage phase-change material with real-time temperature monitoring function as claimed in claim 25, **characterized in that**:
the thickness of the inner layer is 3 mm or more, and the thickness of the outer layer is 5 mm or more; and/or
a spacer layer is further disposed between the inner layer and the outer layer; and/or
the inner layer is provided with a cavity; and/or
the second polymer aerogel has photoluminescence performance and is capable of changing an optical signal along with the change of temperature; preferably, the second polymer aerogel is selected from at least one of the polymer aerogels having photoluminescence performance and capable of changing an optical signal along with the change of temperature among the recyclable cold-storage phase-change composite material described as claimed in one of claims 18-21; and the second polymer aerogel and the polymer aerogel in the recyclable cold-storage phase-change composite material can be the same or different;
more preferably, the second polymer is a copolymer formed by a polymerizable monomer including one or more of maleic anhydride, maleimide, maleic acid and its ammonium salt, maleamic acid and its ammonium salt with styrene.

27. A preparation method of the recyclable cold-storage phase-change material with real-time temperature monitoring function as claimed in claim 25 or 26, **characterized in that** it comprises the following steps:
(1) reacting a polymer raw material containing one or more of maleic anhydride-, maleimide-, maleic acid and its ammonium salt-, maleamic acid and its ammonium salt-group-containing structural units with aqueous ammonia under a closed condition to obtain a polymer aqueous solution;
(2) placing the polymer aqueous solution in a space on the inner side of the spacer layer or a space between the inner side of the spacer layer and the mold, then pre-freezing, and freeze-drying to obtain a water-soluble polymer;
(3) subjecting the water-soluble polymer obtained in step (2) to heat treatment, and optionally taking out the mold, to obtain a polymer aerogel with a cavity;
(4) loading a phase-change material in the polymer aerogel obtained in step (3), to form the inner layer of the recyclable cold-storage phase-change material;
wherein, in step (2), step (3), step (4) and/or between the steps and/or after step (4), wrapping the second polymer aerogel on the outside of the spacer layer, to form the outer layer of the recyclable cold-storage phase-change material;
alternatively,
in step (2), placing an aqueous solution containing the second polymer aerogel and/or a second polymer aqueous solution in a space on the outer side of the spacer layer, to form the outer layer of the recyclable cold-storage phase-change material; preferably, the second polymer aqueous solution is the same as the polymer aqueous solution in step (1).

28. The preparation method as claimed in claim 27, **characterized in that**:
the mass fraction of the polymer in the polymer aqueous solution of the inner layer is 0.1%-30%, preferably 1%-10%, and/or, the mass fraction of the second polymer in the aqueous solution of the second polymer aerogel and/or in the second polymer aqueous solution each is 0.1%-30%, preferably 0.5%-10%, more preferably 1%-5%; and/or,
in step (2), at the pre-freezing stage, subjecting the polymer aqueous solution obtained in step (1) to different cold source temperatures in various directions, preferably to different cold source temperatures in a single direction.

29. Application of the recyclable cold-storage phase-change composite material as claimed in one of claims 18-21 or the recyclable cold-storage phase-change composite material prepared by the preparation method as claimed in one of claims 22-24, the recyclable cold-storage phase-change material with real-time temperature monitoring function as claimed in claim 25 or 26 or the recyclable cold-storage phase-change material with real-time temperature monitoring function prepared by the preparation method as claimed in claim 27 or 28 in the fields of food preservation, cold chain transportation.
